(19) Europäisches Patentamt
European Patent Office
Office européen des brevets

(11) EP 2 530 497 A1

(12) **EUROPEAN PATENT APPLICATION**
published in accordance with Art. 153(4) EPC

(43) Date of publication:
**05.12.2012 Bulletin 2012/49**

(21) Application number: **11737050.2**

(22) Date of filing: **26.01.2011**

(51) Int Cl.:
***G02B 5/20*** *(2006.01)* ***G02B 5/22*** *(2006.01)*
***G02B 5/30*** *(2006.01)* ***G02F 1/1335*** *(2006.01)*
***G02F 1/13363*** *(2006.01)* ***G02F 1/1339*** *(2006.01)*

(86) International application number:
**PCT/JP2011/051493**

(87) International publication number:
**WO 2011/093337 (04.08.2011 Gazette 2011/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.01.2010 JP 2010017355**

(71) Applicant: **Toppan Printing Co., Ltd.**
**Taito-ku, Tokyo 110-0016 (JP)**

(72) Inventors:
- **HAGIWARA, Hidesato**
  **Tokyo 110-0016 (JP)**
- **SHIMIZU, Mie**
  **Tokyo 110-0016 (JP)**
- **FUKUYOSHI, Kenzo**
  **Tokyo 110-0016 (JP)**
- **TAGUCHI, Takao**
  **Tokyo 110-0016 (JP)**

(74) Representative: **TBK**
**Bavariaring 4-6**
**80336 München (DE)**

(54) **COLOUR FILTER SUBSTRATE FOR SEMITRANSPARENT-TYPE LIQUID-CRYSTAL DISPLAY DEVICE, METHOD FOR MANUFACTURING THE SAME, AND SEMITRANSPARENT-TYPE LIQUIDCRYSTAL DISPLAY DEVICE**

(57) Disclosed is a color filter substrate for a transflective liquid crystal display device, in which a light shielding layer is arranged at a periphery of an effective display region on a transparent substrate, and color pixels of a plurality of colors including green pixels, a spacer, and a first retardation layer are formed in the effective display region, wherein a recess is formed in each of the color pixels, the first retardation layer is formed in the recess, and the first retardation layer has a function for 90 degree polarization rotation of incident light, which has been converted to linearly polarized light, in one passage of the incident light back and forth in a thickness direction of the first retardation layer.

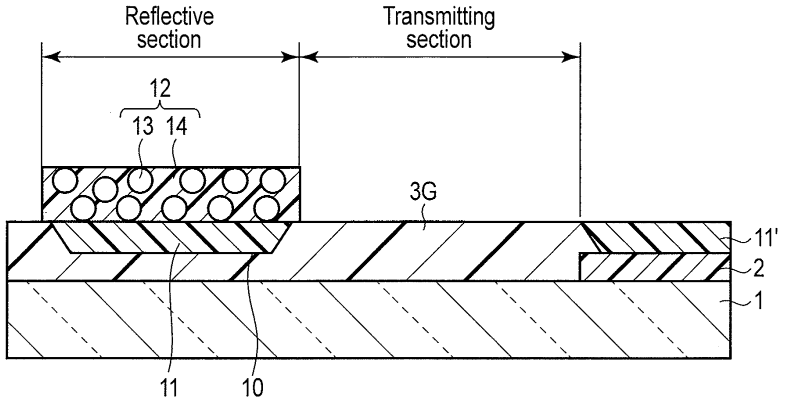


F I G. 1

EP 2 530 497 A1

## Description

### Technical Field

The present invention relates to a color filter substrate for a transflective liquid crystal display device, a method of producing the same, and a liquid crystal display device. In particular, the present invention relates to a color filter substrate for a transflective liquid crystal display which uses a backlight arranged on the back surface of the liquid crystal display together with an external light, a method of producing the same, and a transflective liquid crystal display device. More in particular, the present invention relates to a color filter substrate that is suitable for a liquid crystal display of liquid crystal driving system such as FFS or IPS.

### Background Art

In recent years, in thin type display devices such as a liquid crystal display device, it is increasingly demanded to enhance the picture quality and power-saving thereof and to reduce the manufacturing cost thereof. In the case of the color filter to be employed in such display devices, it is demanded to exhibit sufficient color purity, high contrast, flatness, and electric properties such as low dielectric constant that does not hinder driving of liquid crystal.

In liquid crystal display device having high image quality, various liquid crystal alignment systems or liquid crystal driving systems are proposed. These systems include IPS (In-plane Switching) system, VA (Vertically Aligned) system, HAN (Hybrid Aligned Nematic) system, and FFS (Fringe Field Switching) system. Display device of a wide viewing angle and high speed response are realized by means of these liquid crystal alignment or driving systems.

In liquid crystal display devices of IPS system in which liquid crystal molecules are aligned parallel to a surface of a substrate made of glass, of VA system which is easily applicable to high speed response, and of FFS system that is effective to high speed response, it is demanded for the color filter to obtain further high level flatness (uniformity of film thickness and evenness of the surface of the color filter) and high level electric properties such as dielectric constant.

In such liquid crystal display devices having high image quality, it is a problem to decrease a film thickness of liquid crystal cell (thickness of liquid crystal layer) in order to suppress coloring of image in an oblique viewing direction.

In the liquid crystal display devices of vertical electric field system such as VA system in which driving voltage is applied in thickness direction of the liquid crystal layer, it is a main problem to decrease a film thickness of liquid crystal cell (thickness of liquid crystal layer) for further high speed driving of liquid crystal.

In order to suppress coloring of image in oblique viewing direction, a technique is proposed in which a plurality of coloring layers are stacked to form a spacer for uniformity of the film thickness of the liquid crystal cell together with a flatness of a color filter (for example, Patent Literature 1). The technique, in which a plurality of coloring layers are stacked to form a spacer using photolithography, is advantageous from the viewpoint of confirming uniform gap of liquid crystal cell. However, Patent Literature 1 does not disclose properties and structure of the color filter suitable for FFS system and IPS system, and the technique of a light scattering layer.

A general liquid crystal display device employing FFS system and IPS system has a structure in which a color filter substrate and a array substrate are arranged so that a color filter side of the color filter substrate and a array side of the array substrate are opposed to each other, and the color filter substrate and the array substrate are bonded to each other. In general, a spacer is interposed between the substrates in order to maintain a thickness of a liquid crystal layer, and the thickness of the liquid crystal layer interposed between the substrates is controlled. Further, in the transmissive liquid crystal display device, a light diffusion layer for diffusing a light is often arranged on a back surface of the array substrate together with the backlight described above.

In general, the liquid crystal display device employing FFS system and IPS system has an elemental structure in which liquid crystal is interposed between a color filter substrate and a array substrate provided with a plurality of pixel electrodes (for example, transparent electrode formed into comb teeth pattern and connected to TFT element) and common electrode. Since, in this structure, the common electrode is arranged on the side of the array substrate, it is not necessary to form the common electrode (usually, a thin film formed of conductive metal oxide, so called ITO, which is also called transparent electrode) on the surface of the color filter in the color filter substrate.

In FFS system, liquid crystal molecules aligned parallel to the surface of the array substrate is driven by means of an arched electric field (line of electric force) generated between above described saw tooh-like pixel electrode and the common electrode formed under the pixel electrode through an insulating layer having a thickness of a range of about 0.3 to about 0.5 $\mu$m. Backlights such as fluorescent lamps or LEDs are mostly arranged on the back or side of the liquid crystal display device of FFS system or IPS system. Recently, a study on the liquid crystal display device has been advanced, in which all or a part of the common electrode is made from a reflective metal thin film made of aluminum alloy or silver alloy in the structure of the liquid crystal display device of FFS system or IPS system, thereby to construct a reflective type liquid crystal display device or transflective liquid crystal display device.

The transflective liquid crystal display device is a display device in which one pixel is divided into a transmissive

section using a light from the backlight as a transmitted light and a reflective section for reflecting a light from outer light or front light. Alternatively, the transflective liquid crystal display is a display device in which a display is visualized by outer light with the backlight being turned off, in a bright room.

A technique of forming a light scattering film to the reflective type or transflective liquid crystal display device is disclosed in, for example, Patent Literatures 2, 3. These Patent Literatures do not disclose color filter properties suitable for FFS system or IPS system, and postulate the structure in which a transparent electrode is stacked on the color filter arranged on the viewer side electrode substrate or the like.

The technique of a retardation element having different retardation for each color of red, green and blue, and the technique of a continuous retardation layer laminated on the color filter are known (for example, Patent Literatures 4 and 5). However, these Patent Literatures also do not disclose color filter properties suitable for FFS system or IPS system, and a technique relating to a light scattering layer.

A technique of arranging a retardation layer of 1/4 wavelength for controlling retardation in the reflective section is known (for example, Patent Literatures 6 and 7). Patent Literature 7 proposes a color filter having a reflective section and transmissive section which are different in retardation from each other. However, these Literatures do not disclose color filter properties suitable for FFS system or IPS system, and a technique relating to a light scattering layer.

Further, it is proposed to arrange a partition wall portion and to form a color filter, an alignment film, a retardation film and a thickness adjusting layer of liquid crystal layer by means of a liquid drop injection method (for example, Patent Literature 8).

Prior Literature

Patent Literature

Patent Literature 1: JP A-9-49914
Patent Literature 2: JP 3886740
Patent Literature 3: JP A-2001-272674
Patent Literature 4: JP A-2004-191832
Patent Literature 5: JP A-2005-24919
Patent Literature 6: JP A-2008-165250
Patent Literature 7: JP 3788421
Patent Literature 8: JP A-2009-128860


Summary of the Invention

Problems to Be Solved by the Invention

Since, according to the technique using the light scattering layer (Patent Literatures 2, 3), color filter members such as a light shielding layer and black matrix do not correspond to the liquid crystal display device of FFS system or IPS system in electric properties and flatness, there is harm in smoothly generating an electric field through liquid crystal by driving voltage applied between the pixel electrode and the common electrode which are peculiar to the liquid crystal display device of FFS system or IPS system, thus bringing about problems in image quality.

These techniques do not consider adjustment of retardation which is necessary for the transflective liquid crystal display device, for example, by using a 1/4 wavelength layer (usually, a retardation layer having a function for converting linearly polarized light to circularly polarized light, or a retardation layer having a function for recovering circularly polarized light to linearly polarized light. Hereafter, the retardation layer having a function for 90 degree polarization rotation of incident light converted to linearly polarized light is referred to simply as a retardation layer or 1/4 wavelength layer.). Further, since in the liquid crystal display device disclosed in Patent Literature 7, a reflective layer and a retardation layer are disposed on one substrate in this order, the reflective layer cannot be used as a light reflective electrode.

The techniques of Patent Literatures 6 and 7, which disclose arrangement of a retardation layer in a transflective liquid crystal display device, do not estimate utilizing the liquid crystal display device in parallel light of high intensity such as a sun light, and do not consider the liquid crystal display device that can be utilized in either atmosphere of light atmosphere or dark atmosphere. Further, the liquid crystal display devices are not adapted to FFS system or IPS system and do not disclose color filter properties that are necessary for these liquid crystal display devices.

Since the color filter substrate proposed in the technique of Patent Literature 8 includes a conductive opposed electrode arranged on a color filter and black matrix formed of conductive metal chromium, it is difficult to apply to the liquid crystal display device of FFS system or IPS system.

When the 1/4 wavelength layer is formed by means of light-curing or combination of light-curing and thermosetting, there is a problem in which unreacted monomer of polymerizable liquid crystal compound for use in forming 1/4 wavelength layer is apt to remain on the surface site of the 1/4 wavelength layer. Liquid crystal used in the liquid crystal display device is polluted with the unreacted monomer, thereby deteriorating the display characteristics of the liquid crystal display device or changing retardation of the 1/4 wavelength layer itself with time. Most of polymerizable liquid crystal compounds have an inhibitory effect on oxygen and the unreacted monomer is apt to remain after post-exposure hardening, thereby degrading an optical function of the liquid crystal display device.

Further, when the 1/4 wavelength layer is formed into discrete patterns each of which has a rectangular sectional shape, in the reflective section, the patterns fluidize on hardening by heat treatment and occasionally are crumbled. In addition, when the 1/4 wavelength layer is not formed every color pixel and is formed as a continuous layer, a retardation is remains in an unnecessary portion (transmitting section) and it is not possible to avoid a bad influence on display quality of the liquid crystal display device.

Patent Literature 1 discloses in paragraph 0023 that carbon black is superior in light shielding property and particularly preferable. However, since carbon black is a colorant having high dielectric constant, it is not proper for the liquid crystal display device of FFS system or IPS system. When carbon is used as a main colorant (100% to 90% based on total pigment weight), the relative dielectric constant of the light shielding layer or the black matrix containing carbon becomes about 7 to 15. Theses are color filter members unsuitable for the liquid crystal display device of FFS system or IPS system.

The relative dielectric constant of the liquid crystal material operated by an active element such as TFT is a range of about 7 to 40. It is necessary to use components of the color filter having relative dielectric constant of 5 or less, preferably 4.5 or less in the liquid crystal display device of FFS system or IPS system. In the liquid crystal display device of FFS system or IPS system, the arch line of electric force generated a pixel electrode of comb teeth shape and a common electrode is deformed by the presence of the conventional light shielding layer and black matrix containing a high dielectric constant colorant such as carbon, thereby hindering uniform response of liquid crystal layer. Further, these techniques of arranging black matrix containing a light shielding material (including Patent Literature 2) do not consider thickness of the black matrix and coloring layer from the standpoint of flatness, and can be hardly apply to the liquid crystal display device of high quality.

In addition, these Patent Literatures do not disclose the transflective liquid crystal display device which can be produced without increasing producing steps and in which flatness between the green pixel and light shielding layer (light shielding picture frame portion) is improved in consideration for visual sensitivity of human eyes.

Patent Literature 8 discloses a technique of arranging light shielding ridges on the substrate beforehand to form a color filter and retardation layer between the ridges by a droplet ejecting method. This technique has some problems. Though the ridges having enough height for maintaining the droplets ejected through the nozzle are important member for this technique, it is difficult to produce in high yield the ridges having linearity suitable for the liquid crystal display device and excellent section shape using a material having a light shielding property and photosensitivity (for example, a method or the like is disclosed in paragraphs 0048 and 0060 of Patent Literature 8. However, height and thickness of the ridges are not disclosed). Even if a ridge are formed by means of a printing method, it is difficult to form a ridge having for example, a width of 10 $\mu$m and a height of 4 $\mu$m with a rectangular section and good shape in the same manner as in the case using photosensitive light shielding material and to apply to the liquid crystal display device for high quality and mobile applications. This Patent Literature does not disclose specific materials of the light shielding ridge and electrical properties of the color filter material suitable for FFS system. Since, when only reflective common electrode is arranged, light is reflected on a mirror surface, it is not possible to maintain a wide visual field in the reflective display. Further, the Patent Literature does not disclose the technique of paper white display using a light scattering film.

When the component disclosed in Patent Literature 8 is used, it is difficult to form a spacer for maintain the uniform thickness of the liquid crystal layer in the display region including the reflective display region. This Patent Literature does not consider display unevenness due to change in the thickness of the liquid crystal layer depending on bending of the substrate, temperature, and change in thickness of the liquid crystal layer resulting from pressure change.

The present invention is completed under the circumstance described above, and it is an object of the present invention to provide a color filter substrate for a transflective liquid crystal display device which is suitable for a liquid crystal display device of FFS system or IPS system, a method of producing the same, and a transflective liquid crystal display device.

Means for Solving the Object

According to a first aspect of the present invention, there is provided a color filter substrate for a transflective liquid crystal display device, in which a light shielding layer is arranged at a periphery of an effective display region on a transparent substrate, and color pixels of a plurality of colors including green pixels, a spacer, and a first retardation layer are formed in the effective display region, wherein a recess is formed in each of the color pixels, the first retardation

layer is formed in the recess, and the first retardation layer has a function for 90 degree polarization rotation of incident light, which has been converted to linearly polarized light, in one passage of the incident light back and forth in a thickness direction of the first retardation layer.

According to a second aspect of the present invention, there is provided a transflective liquid crystal display device which comprises the color filter substrate described above.

According to a third aspect of the present invention, there is provided a method of producing a color filter substrate for a transflective liquid crystal display device, in which a light shielding layer is arranged at a periphery of an effective display region on a transparent substrate, and color pixels of a plurality of colors including green pixels, a spacer, and a first retardation layer are formed in the effective display region, which comprises: forming a recess in each of the color pixels, and forming an alignment film for aligning the retardation layer in the recess by ink-jet process.

Advantage of the Invention

According to one aspect of the present invention, there is provided a color filter substrate for a transflective liquid crystal display device which is suitable for FFS system or IPS system, in particular a transflective liquid crystal display device showing an excellent display in both the transmitting section and reflective section.

According to one aspect of the present invention, there is provided a color filter substrate which is suitable for a transflective liquid crystal display device, and in which a retardation layer, and a cell gap adjusting layer or a light scattering layer having a function for scattering a light added thereto together with the retardation layer, are arranged on color pixels.

According to one aspect of the present invention, where the cell gap adjusting layer or the light scattering layer are arranged on color pixels, the retardation layer is protected by the cell gap adjusting layer or the light scattering layer, and the hardening of the retardation layer is promoted, whereby the retardation layer having a stable retardation property can be obtained. In addition, according to the present invention, since an alignment film for alignment treatment of the retardation layer selectively formed in the recess of the coloring layer in small number of steps, there is provided a color filter substrate for the liquid crystal display device that can display a high quality image.

Further, according to one aspect of the present invention, a step at the picture frame portion can be removed by laminating the cell gap adjusting layer or the retardation layer on the light shielding layer of picture frame shape. In addition, there is provided a liquid crystal display device in which light leakage due to turbulence of liquid crystal alignment is deleted by equalizing the thickness of the laminate with that of the green pixel.

Green color is an important color having a high visibility to a human eye and easily leak due to spectral properties. It is preferred that the thickness of the liquid crystal layer on the picture frame portion or the like is determined on the basis of that of the green pixel.

According to one aspect of the present invention, it is possible to form a color filter substrate having an excellent flatness with high accuracy in a small number of steps, and there is provided a liquid crystal display device comprising the above color filter substrate. Further, according to the present invention, there is provided a color filter substrate for a high quality liquid crystal display device produced in consideration of electrical properties such as a relative dielectric constant, and the liquid crystal display device. In addition, there can be provided a high quality liquid crystal display device using a light shielding layer containing a plurality of organic pigment as a main colorant, and zinc phthalocyanine halide having excellent electrical and optical properties for a green pixel as a main colorant.

Further, according to the present invention, it is possible to compensate completely the retardation layer for wavelength dispersion by setting retardation value of the red pixel, the retardation value of the green pixel and the retardation value of the blue pixel, or the sum of the retardation value of each of the color pixels and the retardation value of the retardation layer to satisfy a relation represented by the value regarding the red pixel ≥ the value regarding the green pixel ≥ the value regarding the blue pixel. Supposing a color display, undesirable relation of red pixel < green pixel < blue pixel can be cancelled, and light leakage and coloring in black display can be reduced.

In particular, in IPS system, it is possible to reduce leakage of a blue light in black display by lessening the retardation of the blue pixel or reflective section of the blue pixel than that of the other pixel while maintaining the relation of transmission peak wavelengths (large and small relation of wavelength) of the other pixels. Further, when the thicknesses of the color pixels have the relation represented by the thickness of the red pixel ≥ the thickness of the green pixel ≥ the thickness of the blue pixel, there is obtained the effect that the thickness of the liquid crystal layer on the pixels have the relation represented by the thickness of the liquid crystal layer on the red display section ≥ the thickness of the liquid crystal layer on the green display section ≥ the thickness of the liquid crystal layer on the blue display section, whereby display quality of the liquid crystal display device can be improved in the entire visible region.

Brief Description of Drawings

FIG. 1 is a cross-sectional view showing a color filter substrate according to one embodiment of the present invention;
FIG. 2 is a cross-sectional view showing a color filter substrate according to another embodiment of the present invention;
FIG. 3 is a cross-sectional view showing another part of a color filter substrate according to one embodiment of the present invention;
FIG. 4 is a view an enlarged partial sectional view showing the part encircled by dotted line shown in FIG. 3;
FIG. 5 is a plan view showing a color filter substrate according to one embodiment of the present invention;
FIG. 6 is a characteristic diagram showing a relation between the thickness of a pedestal and the thickness of the laminated section of a coloring layer on the pedestal;
FIG. 7 is a plan view showing a color filter substrate according to another embodiment of the present invention;
FIG. 8 is a characteristic diagram showing a relation between the thickness of a black matrix and the height of the protrusion at the edge of a coloring layer on the black matrix;
FIG. 9 is a sectional view showing a pattern edge shape and a slope angle of color pixels having a large thickness;
FIG. 10 is a sectional view showing a pattern edge shape and a slope angle of color pixels having a small thickness;
FIG. 11 is a cross-sectional view showing a color filter substrate obtained in Example 3;
FIG. 12 is a partial sectional view showing a liquid crystal display device according to one embodiment of the present invention;
FIG. 13 is a partial sectional view showing a liquid crystal display device according to the present invention and also schematic view showing FFS operation of liquid crystal; and
FIG. 14 is a schematic view showing a conventional color filter substrate.

Best Mode for Carrying Out the Invention

A color filter substrate according to one embodiment of the present invention is constructed such that a light shielding layer is arranged at a periphery of an effective display region on a transparent substrate, and color pixels of a plurality of colors including green pixels, a spacer, and a first retardation layer are formed in the effective display region, and is applied to a transflective liquid crystal display device. The transflective liquid crystal display device includes a reflective section for reflecting a light of watcher side such as an ambient light or a light from a front light and a transmitting section for transmitting a light from a back light arranged on the rear surface of the liquid crystal display device. According to this structure, the pixels are divided into a reflective section pixel and transmitting section pixel for each pixel.
In the following description, a light shielding layer is synonymous with a picture frame portion which means a picture frame shaped light shielding pattern on the periphery of an effective display region.
In the color filter substrate of the present embodiment, a recess is formed in each of the color pixels, and a retardation layer is formed in the recess. The retardation layer has a function for compensating a light path difference between the reflective section and the transmitting section. In other word, the retardation layer has a function for converting linearly polarized light, which is incident light (ambient light) transmitted through a polarizing plate externally installed on the liquid crystal display device, to circularly polarized light, and a recovering a light reflected on a reflective electrode (or reflective plate) arranged in the liquid crystal display device to linearly polarized light as emitted light.
Specifically, the retardation layer has a function for changing the phase of the polarized light by 1/4 wavelength or 1/2 wavelength to convert to linearly polarized light with 90 degree polarization rotation in one passage of the incident light back and forth in a thickness direction of the liquid crystal layer.
Further, after the absorption axis of the polarizing plate is adjusted to the slow axis of the retardation layer, 90 degree or 270 degree polarization rotation may be performed using a 1/2 wavelength retardation layer. For example, in the liquid crystal display device of IPS system in which liquid crystal molecules are aligned in parallel to the surface of the substrate and rotated in the direction of the surface of the substrate, it is possible to perform 90 degree polarization rotation by shifting from the absorption axis of the polarizing plate to the slow axis of the retardation layer by 22.5 degree or 67.5 degree, together with using the 1/2 wavelength retardation layer. When the retardation layer is applied to the reflective section of the transflective liquid crystal display device in the structure as described above, it is possible to adjust the difference in light path between the reflective section and transmitting section, and to compensate the phase.
Premising alignment of liquid crystal molecules in liquid crystal display system of VA system or TN system, it is possible to set the angle of the absorption axis of the polarizing plate with the slow axis of the retardation layer to about 45 degree.
In the color filter substrate of the present embodiment, a spacer is a structure having a cross section of trapezoid or column shape and almost the same thickness as that of the liquid crystal layer, which is formed in order to equalize the thickness of the liquid crystal layer in the transmitting section in the effective display region. Other than this spacer, it is possible to form a low spacer in the effective display region and on the light shielding layer. These spacers may be formed on the color filter using a photosensitive acrylic resin that is soluble in alkali solution. However, where the spacers are formed of one to three-coloring-layer structure, they can be formed at the same time when the color pixels are formed,

whereby the producing process can be simplified.

Incidentally, in general, the color filter substrate and the array substrate having active elements for driving liquid crystal are opposed and bonded with each other, with the liquid crystal layer being interposed therebetween to produce a liquid crystal display panel. The height of the spacer must include margin in this panel producing process. The height of the spacer is defined as a distance between the upper level of the spacer and the upper level of the color pixel adjacent the spacer.

From the standpoint of thickness, a portion of the color pixel in the transmitting section is defined merely as a coloring layer, a thin portion of the color pixel in the transmitting section is defined as a recess coloring layer, and a portion of the coloring layer laminated as a spacer is defined as a laminated coloring layer. These coloring layers can be produced in the same coating step and lithography step.

A coating film on the transparent substrate coated with a photosensitive coloring composition for forming pixels of the color filter or a single layer of a photosensitive coloring composition is defined as a coloring layer, and a pattern formed by patterning the coloring layer using conventional photolithography is defined as a color pixel.

The thickness of the color pixel refers to a distance between the surface of the transparent substrate and the surface of the center of the color pixel (in this case, center of color pixel without recess). It is preferred that a ratio of the thickness of the recess coloring layer to the thickness of the coloring layer (portion without recess) is a range of 1/2 to 1/4. The thickness of the recess coloring layer of thickness ratio 1/2 includes allowable tolerance of $\pm$ 0.2 $\mu$m relative to the thickness of the coloring layer. It is possible to display an inherent color image in consideration to the light path difference between the transmitting section and reflective section by setting a ratio of the thickness of the recess coloring layer to the thickness of the coloring layer without recess to 1/2.

Brightness is important for the reflective section in order to make observation in a bright atmosphere such as outdoors. It is desirable that the chromaticity region of the transmitting section is in agreement with that of the reflective section. However, when prime importance is placed on the brightness, it is sufficient that a color can be merely recognized. For example, in the use of reflective display (for example, use outdoors in the sun) in which prime importance must be placed on the brightness than color combination with color in the transmitting section, it is desirable to obtain a high brightness color by setting the thickness ratio to 1/3 or 1/4.

Where the chromaticity region of the transmitting section in the static display (freeze-frame picture) has NTSC ratio of 70% that is standards, the chromaticity region of the reflective section has NTSC ratio of about 35 to 40% in the case of 1/4 thickness (transmission twice). When the NTSC ratio is 35 to 40%, it is possible to easily recognize a color. However, the NTSC ratio is remarkably lower than that range, it may be difficult to recognize a color. Therefore, it is desirable that the thickness of the reflective section is 1/4 or more that corresponds to NTSC ratio of about 35 to 40%.

Color visibility in the moving picture gray scale display tends to drop relative to the freeze-frame picture display. Though there are variations among individual users, the thickness of the recess coloring layer that is 1/4 of that of the coloring layer is the lower limit in which color display is easily recognized in the moving picture gray scale display. The height of the overlap portion of the adjacent color pixels (referred to protrusion hereinafter) is defined as a difference between the top level of the protrusion and the surface level of center of the color pixel. A plurality of color pixels are represented as a blue pixel, a red pixel, green pixel, yellow pixel, and white pixel (transparent pixel).

The term "color filter" as used herein refers to the structure of color pixels of a plurality of colors including a light shielding layer, and the term "color filter substrate" as used herein refers to the structure including a transparent substrate such as glass substrate and the color filter formed thereon. Each of the terms "red laminate portion", "green laminate portion", and "blue laminate portion" as used herein refers to a part of coloring layers laminated as a spacer. The term "almost the same thickness" as used herein refers to a thickness including allowable production margin of $\pm$ 0.2 $\mu$m in the producing process of the color filter.

The term "relative dielectric constant" as used herein is based on premises that it is measured under the frequency of 50 to 500 Hz used in driving a liquid crystal display device at a room temperature.

In the color filter substrate according to the other embodiment of the present invention, a cell gap adjusting layer is arranged on a retardation layer in order to adjust the thickness of the liquid crystal layer in the reflective section. In this case, a level difference between a surface of the first cell gap adjusting layer and a surface of the color pixel without the recess may be about 1/2 of a thickness of a liquid crystal layer of a liquid crystal display device. Incidentally, about 1/2 of a thickness of a liquid crystal layer may fluctuate within 10% of the thickness of a liquid crystal layer, and desirably within $\pm$ 0.2 $\mu$m that is allowable production margin in the producing process of the color filter. The term "almost the same thickness" as used herein refers to a thickness including allowable production margin of $\pm$ 0.2 $\mu$m in the producing process of the color filter.

The cell gap adjusting layer may be formed of an insulator that is transparent in a visible range, and may be desirably a light scattering layer having a light scattering property added thereto. Namely, the light scattering layer imparts diffusivity to an outgoing light, whereby the light from the liquid crystal display device appears paper white for watcher's eyes. The light scattering layer plays a role as a diffuser for obtaining a good visibility display.

In the color filter substrate according to the further embodiment of the present invention, a pedestal and black

matrix may be arranged. These pedestal and black matrix may be formed of the same light shielding material as that of the light shielding layer. Premising the liquid crystal display device constituted by the color filter substrate and array substrate bonded therewith, the pedestal may be arranged on the color filter substrate side at a position corresponding to the position of active elements such as TFT in order to light-shield the active elements. The spacer may be arranged on the pedestal in order to equalize the cell gap. The pedestal has an area enough to cover the active elements. The black matrix formed as necessary refers to a light shielding pattern of lattice or stripe arranged in the display region in order to improve contrast of the liquid crystal display device.

It is preferred that the thickness of the pedestal and black matrix is thinner than that of the light shielding layer. The method of forming thin pedestal and thin black matrix includes employment of half-tone mask or gray-tone mask in exposure step, and adjustment of aperture of the mask in addition to development step and heat treatment.

FIG. 1 is a partial sectional view showing a color filter substrate according to one embodiment of the present invention and corresponds to A-A' section of a plan view shown in FIG. 5 described later. In FIG. 1, a light shielding layer 2 containing an organic pigment as a main colorant is arranged in the picture frame portion in the periphery of the display region on a transparent substrate 1, and three color pixels of red pixel 3R (not shown), green pixel 3G, and blue pixel 3B are arranged in the display region on the transparent substrate 1.

The color pixel (3G in FIG. 1) includes a reflective section and a transmitting section. A recess 10 is formed in the reflective section. A retardation layer 11 is formed in the recess 10, and a light scattering layer (cell gap adjusting layer) 12 is formed on the retardation layer 11. A retardation layer 11' is formed also on the light shielding layer 2 of picture frame shape.

In the color filter substrate shown in FIG. 1, the light scattering layer 12 is constituted by dispersing single kind of or a plurality of kinds of amorphous fine particles in a matrix resin 14 having a refractive index different from that of the particles. The cell gap adjusting layer functioning as the light scattering layer 12 is a light functioning film for scattering an incident light to exert the paper white effect for human eyes. It is necessary that the matrix resin is a transparent resin and has a heat resistance and transmittance in visible range. The thickness of the light scattering layer 12 is preferably a range of about 1.5 to 5 μm with relation to diameter of amorphous fine particles, wavelength, and adaptability to the producing process.

In the color filter substrate shown in FIG. 2, a cell gap adjusting layer 15 made of transparent resin is formed instead of the light scattering layer 12 shown in FIG. 1. The cell gap adjusting layer 15 is arranged in order to adjust the difference in light path between the transmitting section and the reflective section. Therefore, a resin material having highly transparency to visible light and a heat resistance necessary in the liquid crystal display panel producing process can be used as a material for the cell gap adjusting layer 15. In the color filter substrate shown in FIG. 2, a cell gap adjusting layer 15' is formed also on the light shielding layer of picture frame shape, and sum of the thickness of the cell gap adjusting layer 15' and the thickness of the light shielding layer in this portion is identical with that of the green pixel 3G. Incidentally, FIG. 2 is equivalent to C-C' section in the plan view of FIG. 7 described later.

FIG. 3 is a cross-sectional view showing the other portion of a color filter substrate according to one embodiment of the present invention and corresponds to B-B' sectional view of a plan view of FIG. 5 described later. In FIG. 3, a light shielding layer 2 containing an organic pigment as a main colorant is arranged in the picture frame portion in the periphery of the display region, and three color pixels of red pixel 3R (not shown), green pixel 3G, and blue pixel 3B are arranged in the display region, respectively. The light shielding layer has the same thickness as that of the color pixels. A pedestal 4 made of the same material as that of the light shielding layer 2 is formed on the transparent substrate 1 and on the boundary between the red pixel 3R and green pixel 3G. A spacer 5 formed of the laminates of a red laminate portion, a green laminate portion, and a blue laminate portion is arranged on the pedestal 4.

Incidentally, a pedestal 4' having no spacer 5 thereon is formed on the transparent substrate 1 and on the boundary between the green pixel 3G and blue pixel 3B. The pedestal 4' having no spacer 5 thereon is arranged in order to adjust aperture ratio of the red pixel 3R, the green pixel 3G, and the blue pixel 3B, and to shade the active elements such as TFT.

Further, a sub spacer 6 of two-layer structure, which is shorter than the spacer 5 of three-layer structure, is arranged on the light shielding layer 2.

The pedestal 4 has a thickness of a range of 0.4 to 1.0 μm which is smaller than that of the light shielding layer 2. When the thickness of the pedestal 4 is less than 0.4 μm, it is difficult to form the pedestal 4 having a stable thickness by photolithography. On the other hand, when the thickness of the pedestal 4 is more than 1.0 μm, the thickness of the laminate on the pedestal 4 decreases, and the difference in thickness between the laminate and pixels is abruptly enlarged, and as a result, thickness of the laminate becomes unstable.

A TFT substrate is arranged to oppose to the color filter substrate constructed above, and a liquid crystal layer is interposed between the TFT substrate and the color filter substrate, thus constructing the liquid crystal device. The thickness of the liquid crystal layer is identical with the height of the spacer formed on the pedestal. The height h of the spacer 5 refers to the thickness of the portions protruded from the surface of the color pixels 3R, 3G, 3B, in the laminates of the red laminate portion 5R, green laminate portion 5G, and blue laminate portion 5B, and is preferably identical with

the sum of the thickness of the liquid crystal layer and margin of about 0.1 μm in the liquid crystal cell producing process.

FIG. 4 is a view an enlarged partial sectional view showing the part encircled by dotted line shown in FIG. 3. The part encircled by dotted line is an overlapped portion of the green pixel 3G and blue pixel 3B. The overlapped portion forms a protrusion 7 protruded from the surface of the pixel. The height d of the protrusion 7 is preferably 0.25 μm or less since excessively high protrusion damages the flatness of the pixel.

FIG. 5 is a view showing a plane arrangement of a light shielding layer 2, pedestals 4, 4', a spacer 5, a sub spacer 6, and a light scattering layer (cell gap adjusting layer) 12 in the color filter substrate. A-A' section of FIG. 5 corresponds to FIG. 1, and B-B' section of FIG. 5 corresponds to FIG. 3.

Next, there will be described materials constituting the color filter substrate constructed above.

At first, organic pigments are enumerated which can be used in the light shielding layer 2, the red pixel 3R, the green pixel 3G, the blue pixel 3B, the pedestal 4, and the spacer 5. Incidentally, the organic pigment contained in the light shielding layer is a mixture of various organic pigments. The following green pigment may be omitted from the pigment mixture, and carbon may be added to the pigment mixture unless the relative dielectric constant of the light shielding layer increases (for example, relative dielectric constant exceeding 5). The carbon particles to be added are preferably coated with resin or are subjected to surface treatment. The amount of the carbon is preferably 10 weight % or less, more preferably 5 weight % or less based on the total weight of the pigments.

Incidentally, since the light shielding layer and black matrix containing carbon as a main colorant (90 to 100 weight % based on the total weight of the pigments) has a relative dielectric constant of about 7 to 15, they are not suitable for liquid crystal driving of FFS system or IPS system

The amount of the organic pigment to be used may be confined to preferably 90 mass % or more, more preferably 95 mass % or more. In the light shielding layer of the present invention, all colorant contained in the light shielding layer can be organic pigments.

(Organic pigment)

Examples of the red pigment include C.I. Pigment Red 7, 9, 14, 41, 48:1, 48:2, 48:3, 48:4, 81:1, 81:2, 81:3, 97, 122, 123, 146, 149, 168, 177, 178, 179, 180, 184, 185, 187, 192, 200, 202, 208, 210, 215, 216, 217, 220, 223, 224, 226, 227, 228, 240, 246, 254, 255, 264, 272, 279, etc.

Examples of the yellow pigment include C.I. Pigment Yellow 1, 2, 3, 4, 5, 6, 10, 12, 13, 14, 15, 16, 17, 18, 24, 31, 32, 34, 35, 35:1, 36, 36:1, 37, 37:1, 40, 42, 43, 53, 55, 60, 61, 62, 63, 65, 73, 74, 77, 81, 83, 86, 93, 94, 95, 97, 98, 100, 101, 104, 106, 108, 109, 110, 113, 114, 115, 116, 117, 118, 119, 120, 123, 125, 126, 127, 128, 129, 137, 138, 139, 144, 146, 147, 148, 150, 151, 152, 153, 154, 155, 156, 161, 162, 164, 166, 167, 168, 169, 170, 171, 172, 173, 174, 175, 176, 177, 179, 180, 181, 182, 185, 187, 188, 193, 194, 199, 213, 214, etc.

Examples of the blue pigment include C.I. Pigment Blue 15, 15:1, 15:2, 15:3, 15:4, 15:6, 16, 22, 60, 64, 80, etc. Among them, C.I. Pigment Blue 15:6 is preferable.

Examples of the violet pigment include C.I. Pigment Violet 1, 19, 23, 27, 29, 30, 32, 37, 40, 42, 50, etc. Among them, C.I. Pigment Violet 23 is preferable.

Examples of the green pigment include C.I. Pigment Green 1, 2, 4, 7, 8, 10, 13, 14, 15, 17, 18, 19, 26, 36, 45, 48, 50, 51, 54, 55, 58, etc. Among them, C.I. Pigment Green 58 is preferable.

The terms "Pigment Blue", "Pigment Violet", "Pigment Red", "Pigment Yellow", and "Pigment Green" may be abbreviated to "PB", "PV", "PR", "PY", and "PG" hereinafter.

The above-mentioned "PG58" is called as zinc phthalocyanine halide and the producing example of the same is described in [Pigment producing example G2] described later. PG 58 has a dielectric constant slightly lower than that of PG 36 (copper phthalocyanine halide) and brings about a green pixel of high brightness. PG 58 is an organic pigment having almost the same chemical structure as that of PG 36 except that the central metal of PG 58 is zinc, whereas the central metal of PG 36 is copper. However, PG 58 tends to have electric properties including dielectric constant having fluctuation lower than that of PG 36.

The reason that PG 58 is preferable to PG 36 for the present invention irrespective of having similar structure with PG 36, is demonstrated by the following optical data (measurement of birefringence Δn of green pigment) according to the findings of the present inventors. Incidentally, where the solid content of the organic pigment such as zinc phthalocyanine halide in the coloring composition is low, the relative dielectric constant of the coloring layer tends to preferably drop.

It is preferable to lower the pigment content and to raise the resin content in order to lower the floating capacity which is caused by the color filter and is an obstacle to driving of liquid crystal. Therefore, it is preferable to form the light shielding layer and color pixels each having a large thickness as shown in Examples of the present invention.

[Measurement of birefringence Δn of green pigment]

As well known, the value of dielectric constant equals nearly to square of refractive index. That is, dielectric constant caused by electronic polarization is in proportion to square of refractive index.

From this standpoint, difference in polarization between PG 58 and PG 36 became clear from the measured refractive indexes Nx on X axis, Ny on Y axis, and Nz on Z axis. In order to obtain samples close to practical green coloring layer, the measurement samples were prepared by coating the surface of a glass substrate with a pigment dispersion (for example, GP-4) shown in the following Table 4 so as to obtain a 1-μm-thick coated film, which was then dried 230°C.

Main pigment G2 contained in pigment dispersion GP-4 shown in the following Table 4 is PG 58. GP-5 is the pigment dispersion in which the first pigment G2 of pigment dispersion GP-4 is replaced with PG 36. Refractive indexes Nx, Ny, and Nz were measured by making use of a spectroellipsometer (M-220; Nippon Bunkou Co., Ltd.), and the Δn was calculated according to the following equation. Measurement wavelength was 550 nm.

$$\Delta n = [(Nx+Ny)/2] - Nz$$

It is seen from the following Table 1 that the coated film of the green pigment dispersion GP-4 containing zinc phthalocyanine halide as a main pigment has small absolute value of Δn and shows small polarization relative to the coated film of the green pigment dispersion GP-5 containing copper phthalocyanine halide as a main pigment.

Table 1

| Pigment dispersion | Refractive index | | | Δn (absolute value) |
|---|---|---|---|---|
| | Nx | Ny | Nz | |
| GP-4 | 1.69998 | 1.69995 | 1.70006 | 0.000095 |
| GP-5 | 1.69613 | 1.69615 | 1.70773 | 0.01159 |

[Measurement of relative dielectric constant of green pigment]

Relative dielectric constant of green pigment was measured by means of an impedance analyzer 1260 type manufactured by Solartron Co. Ltd., at 5 V in frequency of 120 Hz, 240 Hz, and 480 Hz. The measurement samples were prepared by coating a glass substrate having a conductive film pattern made of aluminum on the surface thereof with a coloring composition to obtain a coated film, which was then cured and on which a conductive film pattern made of aluminum is further formed.

The relative dielectric constant of three kinds of coloring layers were measured, which were formed by using green composition 1 containing green pigment 1, green composition 2 containing green pigment 2, and green composition 3 containing green pigment 3, described below.

<Preparation of a dispersion of green pigment 1>

A mixture having the following composition was homogeneously stirred and then, by making use of a sand mill using glass beads having a diameter of 1 mm, the dispersion of the components of the composition was performed for 5 hours and the resultant product was subjected to filtration by making use of a 5 μm aperture filter to obtain a dispersion of red pigment 1.

| | |
|---|---|
| Green pigment: C.I. Pigment Green 58 (Phthalocianine Green A110; produced by DIC Co. | 10.4 parts |
| Yellow pigment: C.I. Pigment Yellow 150 (E4GN-GT; produced by LANXESS AG) | 9.6 parts |
| Dispersant (Disperbyk-163; produced by BYK-Chemie GmbH) | 2 parts |
| Acrylic varnish (Solid content: 20 mass %) | 66 parts |

<Preparation of a dispersion of green pigment 2>

A dispersion of red pigment 2 was produced in the same manner as in the dispersion of green pigment 1 except that a mixture having the following composition was used.

| | |
|---|---|
| Green pigment: C.I. Pigment Green 58 (Phthalocianine Green A110; produced by DIC Co. | 10.4 parts |
| Yellow pigment: C.I. Pigment Yellow 150 (E4GN-GT; produced by LANXESS AG) | 3.2 parts |
| Dispersant (Disperbyk-163; produced by BYK-Chemie GmbH) | 2 parts |
| Acrylic varnish (Solid content: 20 mass %) | 66 parts |

<Preparation of a dispersion of green pigment 3>

A dispersion of red pigment 3 was produced in the same manner as in the dispersion of green pigment 1 except that a mixture having the following composition was used.

| | |
|---|---|
| Green pigment: C.I. Pigment Green 36 (Lionol Green 6YK; produced by TOYO INK HOLDINGS CO.LTD.) | 10.4 parts |
| Yellow pigment: C.I. Pigment Yellow 150 (E4GN-GT; produced by LANXESS AG) | 9.6 parts |
| Dispersant (Disperbyk-163; produced by BYK-Chemie GmbH) | 2 parts |
| Acrylic varnish (Solid content: 20 mass %) | 66 parts |

1. Preparation of green composition 1

Thereafter, the mixture of the following composition was agitated uniformly and the resultant mixture was subjected to filtration by making use of a 5 μm aperture filter to obtain a dispersion of red composition.

| | |
|---|---|
| Green pigment 1 | 46 parts |
| Acrylic resin solution | 8 parts |
| Dipentaerythritol penta and hexa-acrylate (M-402; produced by ToagoseiCo.Ltd.) | 4 parts |
| Photopolymerization initiator (IRGACURE-OXE 02; produced by Ciba-Geigy Co., Ltd.) | 1.2 parts |
| Photopolymerization initiator (IRGACURE-907; produced by Ciba Speciality Chemicals Co., Ltd.) | 3.5 parts |
| Photo-sensitizer (EAB-F; produced by Hodogaya Kagaku Co., Ltd.) | 1.5 part |
| Cyclohexanone | 50 parts |
| Propyleneglycol monomethylether acetate | 30 parts |

2. Preparation of green composition 2

A green composition 2 was produced in the same manner and using the same composition as in the green composition 1 except that a dispersion of green pigment 2 was used.

3. Preparation of green composition 3

A green composition 3 was produced in the same manner and using the same composition as in the green composition 1 except that a dispersion of green pigment 3 was used.
The results are shown in the following Table 2.

Table 2

| Pigment | | Green pigment 1 | Green pigment 2 | Green pigment 3 |
|---|---|---|---|---|
| Composition | | Green composition 1 | Green composition 2 | Green composition 3 |
| Relative dielectric constant | 120 Hz | 3.7 | 3.5 | 4.6 |
| | 240 Hz | 3.7 | 3.4 | 4.5 |
| | 480 Hz | 3.7 | 3.4 | 4.5 |

(Production of organic pigment dispersion)

Various methods of producing a dispersion of an organic pigment are employed. The following is one example

thereof.

At first, a pigment, a solvent, a pigment dispersant (including pigment derivative) and/or dispersing agent, a surfactant, and if necessary a polymer or monomer were weighed to obtain a determined amount and subjected to dispersion treatment to obtain a pigment dispersion liquid. In the dispersion treatment step, it is possible to use a paint conditioner, beads mill, ball mill, roll mill, stone mill, jet mill, homogenizer and the like. Since the pigment is atomized by this dispersion treatment, the photosensitive resin composition obtained by using the resultant pigment dispersion has improved coating properties.

In the dispersion treatment of the pigment, the alkali soluble resin or pigment derivative may be added. For example, where the dispersion treatment is performed using beads mill, it is preferred to use glass beads or zirconia beads having a diameter of a range of 0.1 mm to a few mm. A temperature in the dispersion treatment is set to generally 0°C or more, preferably room temperature or more, generally 100°C or less, preferably 80°C or less. It is desirable that the dispersion time is conditioned properly since the optimum dispersion time is different depending on the composition of the pigment dispersion liquid (pigment, solvent, dispersant, or the like), scale of device such as beads mill, or the like.

(Adjustment of retardation of color pixels)

Retardation of the color pixel can be fine-adjusted in particular from the standpoint of thickness-direction retardation. It is possible to increase or decrease the retardation of the color pixel by means of various methods such as selection of kinds of pigments to be used, selection of dispersion method of pigment, selection of dispersant, micronizing of pigment, addition of retardation adjusting agent such as melamine resin, styrene resin, organic compound having a benzyl group. The melamine resin has a function of increasing the retardation, and the styrene resin has a function of decreasing the retardation. In the case of the green pixel, zinc phthalosyanine halide can be used to bring easily the retardation of thickness direction of the green pixel to zero.

The adjustment of the retardation of the pixels can be performed by the technique disclosed in Japanese Patent No. 4306736.

(Dispersant, Dispersing agent)

It is preferable to employ a polymer dispersant as a dispersant to dispersing the pigment since it has an excellent dispersion stability with time. The polymer dispersant includes polyurethane based dispersant, polyethyleneimine based dispersant, polyoxyethylene alkylether based dispersant, polyoxyethyleneglycol diester based dispersant, sorbitan aliphatic ester based dispersant, aliphatic modified polyester ester based dispersant, etc. Among these dispersant, graft polymer based dispersant containing nitrogen atom is preferable for the light shielding photosensitive resin composition containing large amount of pigment used in the present embodiment because of an excellent developing property.

As specific examples of these dispersant, they include EFKA (manufactured by FK chemicals BV co.), Disperbic (manufactured by Bickchemie co.), DISPARLON (manucfactured by Kusumoto Chemicals Ltd.), SOLSPERSE (manucfactured by Lubrizol Co.), KP (manucfactured by Shin-etsu Chemical Co. Ltd.), Polyferro (manucfactured by KYOEISHA CHEMICAL CO. LTD.), etc. These dispersants may be employed individually or in any combination of two or more kinds in any mixing ratio.

It is possible to employ colorant derivatives as a dispersion agent. Specific examples of the colorant derivatives include azo based derivatives, phthalocyanine based derivatives, quinacridone based derivatives, benzimidazoline based derivatives, quinophthalone based derivatives, isoindolinone based derivatives, dioxazin based derivatives, anthraquinone based derivatives, indanthrene based derivatives, perylene based derivatives, perylone based derivatives, diketopyroropyrrole based derivatives, dioxadine based derivatives, etc. Among these colorant derivatives, quinophthalone based derivatives are preferable.

Substituent of the colorant derivative includes, for example, sulfonic group, sulfonamide group, quaternary salt of sulfonamide group, phthalimide group, dialkylaminoalkyl group, hydroxy group, carboxyl group, amide group, etc. The substituent is bonded with the pigment skeleton directly or through alkyl group, aryl group, or heterocyclic group. Among these substituents, the sulfonic group is preferable. A plurality of substituents are substituted and bonded to the pigment skeleton.

Specific examples of colorant derivatives includes sulfonic acid derivative of phthalocyamine, sulfonic acid derivative of, sulfonic acid derivative of anthraquinone, sulfonic acid derivative of quinacridone, sulfonic acid derivative of, sulfonic acid derivative of dioxazine, etc.

These dispersants and pigment derivatives may be employed individually or in any combination of two or more kinds in any mixing ratio. The pigment derivatives to be used in Examples described later are shown in the following Table 3.

Table 3

| Pigment derivative | Chemical structure |
|---|---|
| D-1 | 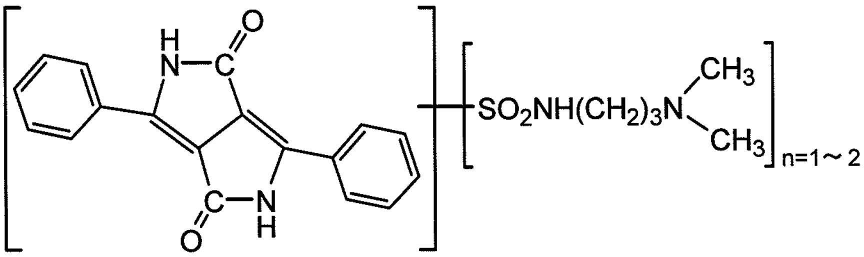 |
| D-2 | 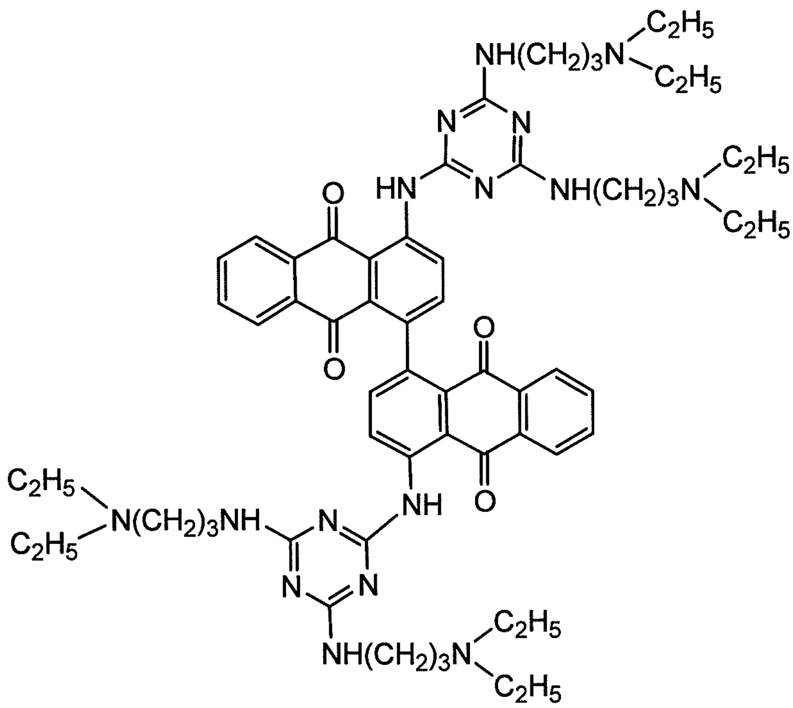 |
| D-3 | 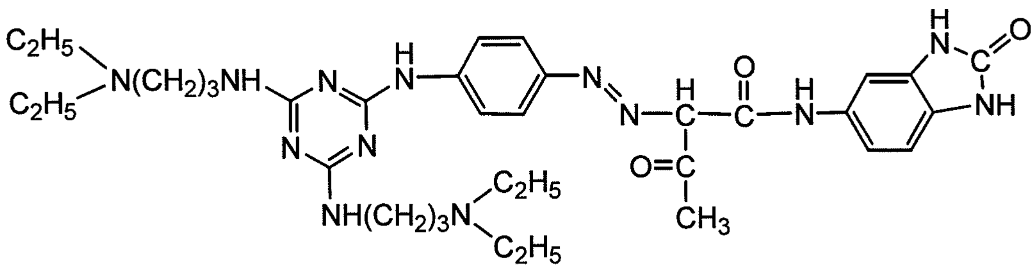 |
| D-4 | 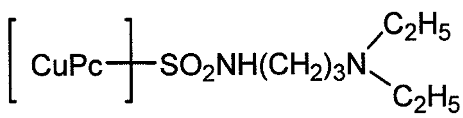 CuPc: copper phthalocyanine residue |

(Transparent resin)

The photosensitive coloring composition employed in forming a light shielding layer or coloring layer may contains polyfunctional monomer, photosensitive resin or non-photosensitive resin, photo-polymerization initiator, solvent, etc., in addition to pigment dispersion described above. Organic resins such as photosensitive resin and non-photosensitive resin, which have high transparency and can be employed in the embodiment of the present invention,

are collectively called a transparent resin.

As for specific examples of the transparent resin, they include thermoplastic resin, thermosetting resin and photosensitive resin. Examples of the thermoplastic resin include, for example, butyral resin, styrene-maleic acid copolymer, chlorinated polyethylene, chlorinated polypropylene, polyvinyl chloride, vinyl chloride-vinyl acetate copolymer, polyvinyl acetate, polyurethane resin, polyester resin, acrylic resin, alkyd resin, polystyrene, polyamide resin, rubber type resin, cyclized rubber-based resin, celluloses, polybutadien, polyethylene, polypropylene, polyimide, etc. Examples of the thermosetting resin include, for example, epoxy resin, benzoguanamine resin, rosin-modified maleic resin, rosin-modified fumaric acid resin, melamine resin, urea resin, phenol resin, etc. It is also possible to employ, as thermosetting resin, compounds obtained through a reaction between melamine resin and a compound having isocyanate group.

(Alkali-soluble resin)

A photosensitive resin composition that can be patterned by photolithography, is preferably used in forming a light shielding layer, light scattering layer, and cell gap adjusting layer in the embodiments described above. As the transparent resins contained in the photosensitive resin composition, resins to which alkali-solubility are imparted, are preferably used. As the alkali-soluble resin, any resins having carboxylic group or hydroxyl group may be preferably employed, and are not limited. As for specific examples of the alkali-soluble resin, they include epoxyacrylate resin, novolak resin, polyvinyl phenol resin, acrylic resin, carboxylic group-containing epoxy resin, and carboxylic group-containing urethane resin. Among these alkali-soluble resin, epoxyacrylate resin, novolak resin, and acrylic resin are preferable. In particular, epoxyacrylate resin and novolak resin are preferable.

(Acrylic resin)

As for specific examples of the acrylic resin, they include following materials.

Acrylic resins include polymers obtained from the monomers, for example, (metha)acrylic acid; alkyl (metha) acrylate such as methyl (metha)acrylate, ethyl (metha)acrylate, propyl (metha)acrylate, butyl (metha)acrylate, t-butyl (metha)acrylate, benzyl (metha)acrylate, lauryl (metha)acrylate, etc.; hydroxyl group-containing (metha)acrylate such as hydoxyethyl (metha)acrylate, hydoxypropyl (metha)acrylate, etc.; ether group-containing (metha)acrylate such as ethoxyethyl (metha)acrylate, glycidyl (metha)acrylate, etc.; and alicyclic (metha)acrylate such as cyclohexyl (metha) acrylate, isobornyl (metha)acrylate, dicyclopentenyl (metha)acrylate, etc.

Incidentally, these monomers can be used singly or in combination of two or more kinds. Further, other kinds of compounds that can be co-polymerized with these monomers such as styrene, cyclohexyl maleimide, phenyl maleimide, etc. can be used as a copolymer.

It is also possible to obtain resins having a photosensitivity through the reaction of a copolymer of carboxylic acid having an ethylenic unsaturated group such as (metha)acrylic acid and a compound having epoxy group and unsaturated double bond such as glycidyl methacrylate, or through the addition of a carboxylic acid-containing compound such as (metha)acrylic acid to a polymer of epoxy group-containing (metha)acrylate such as glycidyl methacrylate or to a copolymer of epoxy group-containing (metha)acrylate with other kinds of (metha)acrylate.

It is also possible to obtain a resin having a photosensitivity through the reaction between a polymer having hydroxyl group and obtained by using a monomer such as hydroxyethyl methacrylate and a compound having an isocyanate group and an ethylenic unsaturated group such as methacryloyloxyethyl isocyanate.

Further, a resin having carboxylic group can be obtained through a reaction between a copolymer of hydroxyethyl methacrylate having a plurality of hydroxyl groups and a polybasic acid anhydride, thereby introducing carboxylic group into the copolymer. The manufacturing method thereof may not be limited to the above-described method.

As for specific examples of the acid anhydride to be employed in the aforementioned reaction, they include, for example, malonic anhydride, succinic anhydride, maleic anhydride, itaconic anhydride, phthalic anhydride, tetrahydrophthalic anhydride, hexahydrophthalic anhydride, methyltetrahydrophthalic anhydride, trimellitic anhydride, etc.

The acid value of solid content of above-described acrylic resin may preferably be confined to a range of 20 to 180 mgKOH/g. If this acid value is less than 20 mgKOH/g, the developing rate of the photosensitive resin composition may become too slow, thereby taking a lot of time for executing the development thereof, thus leading to the decrease of productivity. On the other hand, if the acid value of solid content is larger than 180 mgKOH/g, the developing rate of the photosensitive resin composition may become too fast on the contrary, thereby inviting the generation of problems such as peeling of pattern after the development thereof or the chip-off of pattern.

Further, in the case where the aforementioned acrylic resin is photo-sensitive, the double-bond equivalent of the acrylic resin may preferably be not less than 100, more preferably a range of 100 to 2000, most preferably a range of 100 to 1000. If the double-bond equivalent thereof is higher than 2000, it may become difficult to secure sufficient photo-curing properties.

(Photopolymerizable monomer)

As for specific examples of the photopolymerizable monomer, they include various kinds of acrylic esters and methacrylic esters such as 2-hydroxyethyl(metha)acrylate, 2-hydroxypropyl(metha)acrylate, cyclohexyl(metha)acrylate, polyethyleneglycol di(metha)acrylate, pentaerythritol tri(metha)acrylate, trimethylolpropane tri(metha)acrylate, dipentaerythritol hexa(metha)acrylate, tricyclodecanyl (metha)acrylate, melamine (metha)acrylate, epoxy(metha)acrylate; (metha)acrylic acid; styrene; vinyl acetate; (metha)acryl amide; N-hydroxymethyl (metha)acryl amide; acrylonitrile, etc.
Further, it is preferable to employ polyfunctional urethane acrylate having (metha)acryloyl group which can be obtained through the reaction between (metha)acrylate having hydroxyl group and polyfunctional isocyanate. Incidentally, the combination between the (metha)acrylate having hydroxyl group and polyfunctional isocyanate may be optionally selected and hence there is not any particular limitation. Further, only one kind of polyfunctional urethane acrylate may be used singly or polyfunctional urethane acrylate may be used in a combination of two or more kinds thereof.

(Photo-polymerization initiators)

As for specific examples of the photo-polymerization initiator, they include an acetophenone-based compound such as 4-phenoxy dichloroacetophenone, 4-t-butyl-dichloroacetophenone, diethoxyacetophenone, 1-(4-isopropylphenyl)-2-hydroxy-2-methylpropan-1-one, 1-hydroxycyclohexylphenyl ketone, 2-benzyl-2-dimethylamino-1-(4-morpholinophenyl)-butan-1-one; a benzoin-based compound such as benzoin, benzoin methyl ether, benzoin ethyl ether, benzoin isopropyl ether, benzyldimethyl ketal, etc.; a benzophenone-based compound such as benzophenone, benzoylbenzoic acid, benzoylmethyl benzoate, 4-phenyl benzophenone, hydroxybenzophenone, acrylated benzophenone, 4-benzoyl-4'-methyldiphenyl sulfide, etc.; a thioxanthone-based compound such as thioxanthone, 2-chlorothioxanthone, 2-methylthioxanthone, isopropylthioxanthone, 2,4-diisopropylthioxanthone, etc.; a triazine-based compound such as 2,4,6-trichloro-s-triazine, 2-phenyl-4,6-bis(trichloromethyl)-s-triazine, 2-(p-methoxyphenyl)-4,6-bis(trichloromethyl)-s-triazine, 2-(p-tolyl)-4,6-bis(trichloromethyl)-s-triazine, 2-piperonyl-4,6-bis(trichloromethyl)-s-triazine, 2,4-bis(trichloromethyl)-6-styryl-s-triazine, 2-(naphtho-1-yl)-4,6-bis(trichloromethyl)-s-triazine, 2-(4-methoxynaphtho-1-yl)-4,6-bis(trichloromethyl)-s-triazine, 2,4-trichloromethyl-(piperonyl)-6-triazine, 2,4-trichloromethyl(4'-methoxystyryl)-6-triazine, etc.; an oxime ester-based compound such as 1,2-octanedione, 1-[4-(phenylthio)-2-(O-benzoyloxime)], O-(acetyl)-N-(1-phenyl-2-oxo-2-(4'-methoxynaphthyl)ethylidene) hydroxyl amine, etc.; a phosphine-based compound such as bis(2,4,6-trimethylbenzoyl)phenylphosphine oxide, 2,4,6-trimethylbenzoyl diphenylphosphine oxide, etc.; a quinone-based compound such as 9,10-phenanthrene quinone, camphor quinone, ethyl anthraquinone, etc.; a borate-based compound; a carbazol-based compound; an imidazole-based compound, a titanocene-based compound, etc. Oxime derivatives (oxime compounds) are effective to increase sensitivity.
These photo-polymerization initiators can be employed singly or in combination of two or more kinds thereof.

(Photo-sensitizer)

It is preferable to use these photo-polymerization initiators in combination with a photo-sensitizer. Specific examples of the photo-sensitizer include $\alpha$-acyloxy ester, acylphosphine oxide, methylphenyl glyoxylate, benzyl-9,10-phenanthrene quinone, camphor quinine, ethylanthraquinone, 4,4'-diethyl isophthalophenone, 3,3',4,4'-tetra(t-butyl peroxycarbonyl)benzophenone, 4,4'-diethyl aminobenzophenone, etc.
These sensitizers can be employed at a ratio of 0.1 to 60 parts by mass based on 100 parts by mass of the photo-polymerization initiator.

(Ethylenic unsaturated compound)

It is preferable to use these photo-polymerization initiators in combination with an ethylenic unsaturated compound. "Ethylenic unsaturated compound" means a compound having at least one ethylenic unsaturated bond in the molecule. In particular, it is preferable to use a compound having two ethylenic unsaturated bonds in the molecule in consideration of polymerizability, crosslinkability, and accompanying expandability of difference in solubility by developing solution between the exposed portion and unexposed portion. Further, it is preferable to use (metha)acrylate having an unsaturated bond originating from (metha)acryloyloxy group.
Compound having one ethylenic unsaturated bond in the molecule includes for example, unsaturated carboxylic acid such as (metha)acrylic acid, crotonic acid, isocrotonic acid, maleic acid, itaconic acid, citraconic acid, and alkyl ester thereof; (metha)acrylonitrile; (metha)acrylamide; stylene, etc. A typical example of compound having two ethylenic unsaturated bonds in the molecule includes for example, ester of unsaturated carboxylic acid and polyhydroxy compound, (metha)acryloyloxy-containing phosphate, urethane (metha)acrylate of (metha)acrylate compound and polyisocyanate compound, and epoxy(metha)acrylate of (metha)acrylic acid or hydroxy(metha)acrylate and polyepoxy compound.

The above-described photo-polymerization initiator, sensitizer, photo-sensitizer and ethylenic unsaturated compound may be added to a composition containing polymerizable liquid crystal compound to be used for forming the retardation layer described later.

(Polyfunctional thiol)

The photosensitive color resin composition may contain polyfunctional thiol which is capable of acting as a chain-transfer agent. The polyfunctional thiol is useful as long as the compound thereof has two or more thiol groups. Specific examples of the polyfunctional thiol include hexane dithiol, decane dithiol, 1,4-butanediol bisthiopropionate, 1,4-butanediol bisthioglycolate, ethyleneglycol bisthioglycolate, ethyleneglycol bisthiopropionate, trimethylolpropane tristhioglycolate, trimethylolpropane tristhiopropionate, trimethylolpropane tris(3-mercaptobutylate), pentaerythritol tetrakisthioglycolate, pentaerythritol tetrakisthiopropionate, trimercaptopropionate tris(2-hydroxyethyl)isocyanulate, 1,4-dimethylmercaptobenzene, 2,4,6-trimercapto-s-triazine, 2-(N,N-dibutylamino)-4,6-dimercapto-s-triazine, etc.

These polyfunctional thiols can be employed singly or in combination of two or more kinds. The content of these polyfunctional thiols may preferably be confined to a range of 0.2 to 150 parts by mass, more preferably a range of 0.2 to 100 parts by mass based on 100 parts by mass of the pigment in the photosensitive coloring composition.

(Storage stabilizing agent)

The photosensitive color resin composition may further contain a storage stabilizing agent for stabilizing the variation with time in viscosity of the composition. Specific examples of the storage stabilizing agent include, for example, quaternary ammonium chlorides such as benzyltrimethyl chloride, diethylhydroxy amine, etc.; organic acids such as lactic acid, oxalic acid, etc. and methyl ethers thereof; t-butyl pyrocatechol; organic phosphine such as triethyl phosphine, triphenyl phosphine, etc.; phosphite; etc. The storage stabilizing agent can be employed at an amount of a range of 0.1 to 10 parts by mass based on 100 parts by mass of the pigments in a photosensitive coloring composition.

(Adherence improver)

Further, the photosensitive color resin composition may contain an adherence improver such as a silane coupling agent for the purpose of enhancing the adhesion thereof to a substrate. As for specific examples of the silane coupling agent, they include vinyl silanes such as vinyl tris(β-methoxyethoxy) silane, vinylethoxy silane, vinyltrimethoxy silane, etc.; (metha)acrylsilanes such as γ-methacryloxypropyltrimethoxy silane, etc.; epoxy silanes such as β-(3,4-epoxycyclohexyl)ethyltrimethoxy silane, β-(3,4-epoxycyclohexyl) methyltrimethoxy silane, β-(3,4-epoxycyclohexyl) ethyltriethoxy silane, β-(3,4-epoxycyclohexyl) methyltriethoxy silane, γ-glycidoxypropyl trimethoxy silane, γ-glycidoxypropyl triethoxy silane, etc.; amino silanes such as N-β (aminoethyl) γ-aminopropyl trimethoxy silane, N-β (aminoethyl) γ-aminopropyl triethoxy silane, N-β (aminoethyl) γ-aminopropyl methyldiethoxy silane, γ-aminopropyl triethoxy silane, γ-aminopropyl trimethoxy silane, N-phenyl-γ-aminopropyl trimethoxy silane, N-phenyl-γ-aminopropyl triethoxy silane, etc.; and thiosilanes such as γ-mercaptopropyl trimethoxy silane, γ-mercaptopropyl triethoxy silane, etc. These silane coupling agents can be used in an amount of a range of 0.01 to 10 parts by mass based on 100 parts by mass of the pigments in a photosensitive coloring composition.

(Solvents)

The photosensitive resin composition may further contain a solvent such as water, organic solvents, etc. so that the surface of a substrate is uniformly coated therewith. Further, in the case where the photosensitive resin composition of the present invention is to be used for constituting the coloring layer of color filter, the solvent acts to enable pigments to be uniformly dispersed in the coloring layer. Specific examples of the solvent include, for example, cyclohexanone, ethyl Cellosolve acetate, butyl Cellosolve acetate, 1-methoxy-2-propyl acetate, diethyleneglycol dimethyl ether, ethyl benzene, ethyleneglycol diethyl ether, xylene, ethyl Cellosolve, methyl-n amyl ketone, propyleneglycol monomethyl ether, toluene, methylethyl ketone, ethyl acetate, methanol, ethanol, isopropyl alcohol, butanol, isobutyl ketone, petroleum solvent, etc. These solvents may be employed singly or in combination of two or more kinds. The mixing ratio of these solvents may be confined to the range of 800 to 4000 parts by mass, preferably 1000 to 2500 parts by mass based on 100 parts by mass of the pigments in the coloring composition.

(Thickness of liquid crystal layer)

As described above, the technique of the present invention is suitable for the liquid crystal driving system such as IPS (parallel alignment, transverse electric field system) system or FFS (Fringe field switching)system. The color filter

of the present invention can be applied to a VA type liquid crystal display device of FFS system by using the technique disclosed Patent Literature 10. In the system in which driving voltage of liquid crystal is applied between the transparent electrode on the color filter substrate and the pixel electrode on the array substrate provided with liquid crystal driving elements (TFT), generally when the thickness (cell gap) of the liquid crystal layer small, it is possible to increase response speed of liquid crystal.

In the liquid crystal driving system described above, the thickness of the liquid crystal layer may be a range of about 2 to 4 μm. Further, when the thickness of the liquid crystal layer is small, coloration (change in color) on viewing from oblique direction decreases. Therefore, it is better to decrease the thickness of the liquid crystal layer from the standpoint of responsibility and improvement in coloration. Incidentally, the thickness of the liquid crystal layer refers to a distance between the surface of the color pixel on the central portion and the surface of the transparent substrate that is in contact with the color pixel.

However, since the smaller the thickness of the liquid crystal layer, or larger the display region of liquid crystal, the larger the effect of dirt or foreign matter, the lower limit of the thickness of the liquid crystal layer may be about 3 μm in vertical electric field system. Since it is unnecessary to form a transparent electrode on the color filter side in IPS system or FFS system, short-circuit due to the conductive dirt incorporated therein does not cause easily. Therefore, from the standpoint of the dirt, it is possible to decrease the thickness of the liquid crystal layer in the liquid crystal display device of IPS system or FFS system. In order to decrease the thickness of the liquid crystal layer, it is desirable that the refractive index anisotropy $\Delta n$ is larger than 0.07.

In the liquid crystal display device of IPS system or FFS system, since it is possible to improve the responsibility and transmittance of liquid crystal by shortening a pitch of the comb teeth (stripe shaped pattern) of the comb teeth electrode (in general, conductive metal oxide thin film called as ITO), the device of this system is not influenced so much relative to the device of vertical electric field system. The pitch of the comb teeth may be adjusted in proportion of main peak wavelength of transmittance of the color pixel.

In the transflective liquid crystal display device, it is desirable that the thickness of the liquid crystal layer in the reflective section is set to 1/2 of that of the liquid crystal layer in the transmitting section in connection with optical path difference between the reflective section and the transmitting section (in the reflective section, incidental light is reflected on the reflective electrode described later, so that the light passes through the liquid crystal layer twice).

Where either one of the comb teeth electrode and the common electrode is formed of a light-reflective metal (aluminum alloy or silver alloy) thin film in the liquid crystal display device of FFS system, a reflective type liquid crystal display device is obtained. Where a part of either one of the comb teeth electrode and the common electrode is formed of a transparent conductive thin film such as ITO, a transflective liquid crystal display device is obtained.

(Pedestal and spacer)

The pedestal for the spacer in the liquid crystal display device according to the present invention may be formed only that portion which is necessary for shielding active elements such as TFT and on which spacer described later is to be formed. Further, it is desirable that the pedestal for the spacer in the present invention is formed of the same material as that of the light shielding layer in the picture frame portion at the same time when the light shielding layer is formed. Specifically, the light shielding layer and the pedestal can be formed at the same time by means of photolithography using a photomask having a plurality of patterns with different transmittance such as a gray tone mask, or another photomask having an aperture smaller than the size of pedestal pattern (exposure dose is adjusted by adjustment of aperture size) or an aperture with various shape.

The photomask may include a light shielding pattern formed of a metallic chromium film, a semi-transmissive section formed of a metal oxide film such as ITO, and a transmitting section having no film. The metal oxide film may be advantageous in that the transmittance thereof can be adjusted depending on film forming condition, film thickness, etc.

The present inventors have confirmed that thinning of the pedestal and the black matrix described later has an effect on improvement in flatness of the display device in the pedestal and black matrix which are made of the same material as that of the picture frame portion (light shielding layer). According to the close analysis result of the present inventors, when the thickness of the pedestal is 1.0 μm or less, it is possible to obtain a stable thickness of the coloring layer formed thereon.

FIG. 6 shows a relationship between the thickness of the pedestal and the thickness of the laminate of the coloring layer on the pedestal. As shown in FIG. 6, when the thickness of the pedestal exceeds 1.2 μm, the thickness of the coloring layer formed thereon becomes small and varies abruptly, and becomes unstable. On the other hand, when the thickness of the pedestal falls below 0.3 μm, stable thickness can not be easily obtained in photolithography step. Therefore, the thickness of the pedestal is preferably a range of 0.4 to 1.0 μm.

The thickness of the black matrix described later may be as thin as 0.4 μm. Moreover, the black matrix may be omitted. FIG. 6 shows a thickness of the laminate portion when the thickness of the coloring layer is 4.5 μm. The similar tendency appears in a thickness of a range of 1.5 μm to 5 μm which is a practical thickness of the coloring layer.

The pattern shape of the pedestal functions also as a light shielding pattern for preventing light current due to an light incident to the active elements such as TFT driving liquid crystal from generating. Since optical density of 1 is sufficient for light shielding of the active elements such as TFT, it is enough that the sum of the thickness of the pedestal and the thickness of the laminate of the plural color pixels is a range of 0.4 to 1.0 μm. Further, in the structure of the present invention, since the plural coloring layers are laminated on the pedestal, the light shielding property is further added.

The color in the coloring layer forming the spacer can be properly selected depending on the purpose and the specification of the spacer. For example, where the light shielding property for the active elements such as TFT precedes the other property, the color may be selected so as to include a red coloring layer that shields a short wavelength light. Where a round shape precedes the other property, a blue coloring layer may be selected as a top layer of two-layer of three-layer spacer, since the blue coloring layer contains mall amount of pigment and has fluidity.

The color filter of the present invention may includes at least four color pixels containing a white pixel (transparent pixel) and a complementary color pixel such as a yellow pixel in addition to the blue pixel, red pixel, and green pixel. A low sub spacer may be arranged in addition to the spacer (main spacer) having a height corresponding to the thickness of the liquid crystal layer. Where the main spacer is a three-layer laminate, a sub spacer of a two-layer laminate may be arranged only on the picture frame portion. Each of the main spacer and sub spacer may be single layer. The low sub spacer can be formed using a photomask having a plurality of patterns with different transmittance such as a gray tone mask, or another photomask having a small aperture.

The technique of the present invention can be a thin type liquid crystal display device. In this case, when a thin liquid crystal layer contains liquid crystal having low fluidity, a number and layout of spacers can be changed, for example, a layout of spacers near the filling inlet of liquid crystal can be changed in consideration of flow of liquid crystal in producing process of the liquid crystal display cell. In the color filter substrate of the present invention, the light shielding layer and the pedestal can be formed in the same photolithography process as described below.

In the color filter of the present invention, the spacer can be formed in each of the color pixels, for example, in the center of each of the color pixels in the longitudinal direction (one site in the center of the pixel or the center of longitudinal side of the pixel) as the structure also having the function of adjusting alignment of liquid crystal. The configuration of the structure viewed from above may be a circle, diamond, polygon, or the like. TFT elements driving liquid crystal may be formed in the center of each of the color pixels in the longitudinal direction corresponding to the position of the spacer. For example, when the alignment controlling structure has a diamond shape viewed from above, the pixel electrode of the array substrate side may be formed into slits of concentric diamond shape and arranged so as to surround the spacer (the slits may be formed alternately with the apertures of the transparent electrodes in a zigzag). This arrangement is particularly effective when liquid crystal of vertical alignment is driven in FFS system.

The member serving both as a spacer and an alignment controlling structure proposed by the present inventors can increase aperture ratio of the pixels and improve brightness. In general, when the alignment controlling structure is tall or is formed in high density, responsibility of liquid crystal can be improved. However, it leads to lowering of aperture ratio of the pixels. In the present invention, since the member serves both as a spacer and an alignment controlling structure, it does not lead to lowering of aperture ratio of the pixels.

Further, when a light alignment film using ultraviolet rays is employed in the liquid crystal display device, the spacer formed in the center of the pixel can be used also as a member of partitioning alignment for multi-domain. When a blue coloring layer having high fluidity on thermosetting of the spacer is used as a top layer of the spacer used in the present invention, the spacer is formed with a smooth sectional configuration.

It is possible to form the spacer by single color (red coloring layer). Where the spacer is formed by single color, the following advantages are obtained. That is, the technique of forming a spacer by laminating two layers or three layers of coloring layers in a discrete arrangement (see, for example, Patent Literature 1) is advantageous in liquid crystal alignment than the technique of forming a spacer by simply laminating coloring layers (see, for example, Patent Literature 1). However, since it is necessary to form a first coloring layer having a large base area in the former in order to compensate a registration error in laminating two layers or three layers of coloring layers, aperture ratio of the pixel may deteriorate. In addition, where the tall stripe-shaped spacer having a narrow width is discretely formed, the thickness of the third coloring layer becomes unreasonably smaller than that of the color pixel, which brings about difficulties in designing the spacer and confirming a condition of producing process. The technique of forming a spacer by laminating two layers or three layers of coloring layers in a discrete arrangement necessitates confirming the condition of producing process for each of kind of the color resist to be used and kind of the color filter to be produced, and it is a troublesome technique. These problems are canceled by forming a spacer using a single coloring layer.

(Thickness of black matrix)

FIG. 7 is a view showing a plane arrangement of a light shielding layer 2, pedestals 4, a black matrix 8, a spacer 5 formed of a laminate of red pixel 3R, green pixel 3G, and blue pixel 3B, a low sub spacer 6, and a cell gap adjusting

layer 15 in the color filter substrate according to the further embodiment of the present invention. In FIG. 7, the black matrix 8 for partitioning three color pixels of red pixel 3R, green pixel 3G, and blue pixel 3B is arranged. C-C' section of FIG. 7 corresponds to FIG. 2.

One embodiment of the present invention is characterized by providing the color filter substrate having a flatness suitable for alignment of liquid crystal molecules and a picture frame without light leakage due to alignment error of liquid crystal molecules, in which the sum of the thickness of the light shielding layer and the thickness of the cell gap restriction layer formed on the light shielding layer is the same as the thickness of the green pixel. The present inventors have confirmed that the thickness of the black matrix formed of the same material as that of the picture frame portion (light shielding layer) has an effect on improvement in flatness of the color filter. The black matrix is generally a lattice-shaped light shielding layer formed so as to encircle the color pixel in order to improve contrast, and may be a stripe formed so as to extend in the longitudinal direction of the pixel. Further, the black matrix may be omitted in the color filter. Alternatively, the black matrix, pedestal, and light shielding layers having different thicknesses may be formed using different photomasks in two steps. The black matrix, pedestal, and light shielding layer, which have different thicknesses, may be formed by adjusting the number of irradiation shots in laser irradiation step.

FIG. 8 shows a relation between the thickness of the black matrix and the height of the protrusion overlapped on the black matrix 8 at the edge of the color pixel. When the thickness of the black matrix exceeds 1.1 μm, the height of the protrusion extremely increases and leads to undesirable results for liquid crystal alignment. When the thickness of the black matrix is less than 1 μm, particularly less than 0.8 μm, the protrusion becomes lower than 0.25 μm, particularly lower than 0.2 μm.

The flatness of the color pixel including fluctuation is ±0.15 μm or less and is excellent, whereby there is provided a color filter meeting a requirement of high quality liquid crystal display device of IPS system or FFS system. Further, there is provided a color filter having an excellent flatness within a range of 1/4 wavelength of 550 nm which is wavelength of green (within ±0.15 μm) with color irregularity being reduced.

The black matrix can be formed at the same time together with the light shielding layer by means of photolithography using gray tone mask or half tone mask in the same manner as in the case of forming the pedestal. Alternatively, the black matrix can be formed changing the irradiation dose or the number of irradiation shots in the laser irradiation to form difference in thickness.

Incidentally, though FIG. 8 does not show the black matrix having a thickness of less than 0.4 μm, the present inventors have confirmed that the height of the protrusion overlapped on the black matrix having a small thickness becomes low. Since the black matrix does not need light shielding property unlike the light shielding layer (picture frame portion), it is possible to omit the black matrix and to substitute the laminate of the plural coloring layers having different colors for the black matrix. The light from a light source (back light) arranged on the rear surface of the transmissive liquid crystal display device can be shielded with scanning lines and signal lines of the active elements such as TFT.

Incidentally, though all of the spacers in the effective display region have almost the same height, the height of the spacers can be adjusted by the thickness of the pedestal, selection of coloring layer, selection of process condition of coating, development, curing, etc., and selection of diameter (size) of the spacer, or the like. The pedestal 4' without spacer 5 is arranged in order to adjust aperture ratios of red pixel 3R, green pixel 3G, and blue pixel 3B and to light-shield the active elements such as TFT.

(Cell gap adjusting layer)

FIG. 2 shows an example of a cell gap adjusting layer 15 of the present invention, which is arranged on a part of the color pixel. In this example, the cell gap adjusting layer 15 is laminated on the reflective section of the green pixel 3G and on the retardation layer 11. As described above, the cell gap adjusting layer 15 is arranged in order to adjust light path difference between the transmitting section and the reflective section. Therefore, the cell gap adjusting layer 15 can be made of resin material having high transmittance to visible light and heat resistance needed in the producing process of the liquid crystal display panel. As shown in FIG. 2, a cell gap adjusting layer 15' is arranged also on the light shielding layer in the picture frame portion, and the sum of the thickness of the cell gap adjusting layer 15' and the thickness of the light shielding layer is the same as the thickness of the green pixel.

Incidentally, though the cell gap adjusting layer 15 is arranged in order to mainly adjust the light path difference between the transmitting section and the reflective section of liquid crystal, it is possible to alter partially the thickness of the cell gap adjusting layer using photosensitive alkali soluble resin and a photomask having a partially different transmittance such as a gray tone mask. The thickness of the cell gap adjusting layer can be partially altered depending on a main wavelength of a light transmitting through the transmitting section. The cell gap adjusting layer may be formed such that not only the reflective section is formed thick, but also the transmitting section is formed thin.

The cell gap adjusting layer can be formed using transparent resin, alkali soluble resin, and acrylic resin, described above. Since the cell gap adjusting layer is formed into pattern-like, it is preferably made of alkali soluble resin that can be patterned by means of photolithography. It is also possible to form the cell gap adjusting layer by means of

dry etching or lift-off method using a thermosetting resin. The cell gap adjusting layer is further preferably formed of a light scattering layer 12.

As described above, the color filter of the present invention is particularly applied to the transflective liquid crystal display device. The pixel of the color filter according to the present invention includes the transmitting section and the reflective section, and the light scattering layer 12 is arranged in the reflective section of the pixel as shown in FIG. 1. Namely, the light scattering layer 12 is arranged on the retardation layer 11 at the same position viewed from above, formed in the recess of the reflective section of the color pixel.

The light scattering layer 12 includes a matrix resin 14 and one kind of or a plurality of kinds of amorphous fine particles 13 having refractive index different from that of the matrix resin 14 and dispersed in the matrix resin 14. The light scattering layer 12 is a light functional film that scatters incident light with the scattered light appearing paper white for viewer. The matrix resin 14 may be a transparent resin having a heat resistance and transparency to visible light. The thickness of the light scattering layer 12 is preferably a range of about 1.5 to 5 μm in consideration of diameter of amorphous fine particles, wavelength of light, and applicability to condition of producing process.

The amorphous fine particles 13 in the light scattering layer 12 include fine particles of inorganic material and fine particles of organic polymer. Though amorphous fine particles are generally made of organic polymer, inorganic fine particles can be also used as long as it is amorphous. The light scattering layer can be formed by means of phase separation method described later in which amorphous fine particles are generated in the matrix resin through phase separation. The light scattering layer can be formed by the method in which pattern of amorphous fine particles is formed by photolithography and the resultant pattern is coated with matrix resin (transparent resin).

The inorganic fine particles to be used include for example, spherical amorphous fine particles of oxide such as silica and alumina. The organic polymer fine particles to be used includes for example, fine particles of acrylic resin, styrene-acrylic copolymer, or the crosslinked polymer thereof, melamine fine particles, melamine-formaldehyde condensate fine particles, fine particles of fluorine polymer such as polytetrafluoroethylene, perfluoroalcoxy resin (PFA), tetrafluoroethylene-hexafluoropropylene copolymer (FEP), polyfluorovinylidene (PVDF), and ethylene-tetrafluoroethylene copolymer (ETFE), silicone resin fine particles, and the like. Among them, crosslinked acrylic resin fine particles are particularly preferable since it has a low refractive index of less than 1.5. Further, silica particles or silicone resin fine particles is particularly preferable since it has a low refractive index of a range of 1.42 to 1.45 (halogen lamp line of 589 nm).

These fine particles may be contained in the light scattering layer as a main fine particles, for example, in content of about 70% or more based on weight of the fine particles. The other fine particles than the above fine particles may be added in an amount of 30 % or less in order to stabilize dispersion in the coating solution and to fine-adjust light scattering property. The other fine particles include non-spherical fine particles such as particles having indefinite shape, or crystalline fine particles.

The fine particles may be surface-treated to improve dispersibility in solvent and compatibility with a transparent resin. The surface treatment includes coating with $SiO_2$, $ZrO_2$, $Al_2O_3$, ZnO, transparent resin, coupling agent, or surfactant, etc. The other surface treatment includes a treatment for causing surface reaction with alcohol, amine, or organic acid, and the like.

Though the shape of the amorphous spherical fine particles is not limitative, generally it may be spherical or the similar shape. The spherical particles are easily controlled in size and particle size distribution, and whereby optical properties of the light scattering layer can be easily controlled. The particle diameter is not limitative since allowable range of the particle diameter alters depending on the thickness and whether color or colorless of the intended light scattering layer. However, when the particle diameter of the fine particles is larger than the thickness of the light scattering layer, the surface of the light scattering layer becomes extremely rough, which is quite undesirable. Though the average particle diameter of the fine particles is not limitative, it may be a range of preferably, 0.8 to 3 μm, more preferably 1 to 2 μm.

Though specific gravity of the fine particles has not directly effect on the optical property of the light scattering layer, it has great effect on the coating property when the light scattering layer is formed. Therefore, it is desirable for stability of coating solution that the specific gravity of the fine particles is near that of a solution of the matrix resin 14.

It is desirable that the matrix resin 14 in which the fine particles are dispersed, has a high transmittance to visible light and high resistance to thermal treatment and chemical treatment in the producing process of the liquid crystal display device. The matrix resin 14 includes for example, a resin having a high refractive index such an epoxy-modified acrylic resin, fluorene resin, and polyimide resin; a resin having a low refractive index such as fluorine-modified acrylic resin, and silicone-modified acrylic resin. The other matrix resin includes acrylic resin, epoxy resin, urethane resin, silicone resin, etc.

Where the light scattering layer are patterned by means of photolithography, acrylic resin or epoxy resin having a photosensitivity and developing property can be utilized as the matrix resin. A thermosetting property or ultraviolet-setting property may be imparted to these resins, which can be used in combination.

Where the fine particles are for example, crosslinked acrylic resin having a refractive index of 1.49 (value using halogen lamp D-line 589 nm), it is preferred that the refractive index of the matrix resin is a range of 1.55 to 1.65 μm.

Further, where the fine particles are silica particles or silicone resin particles having a refractive index of a range of 1.42 to 1.45, it is preferred that the matrix resin has a refractive index of a range of 1.50 to 1.60.

The light scattering layer may be formed by the process in which the amorphous fine particles are mixed with the transparent resin as a matrix resin, and dispersed therein, and the resultant dispersion solution is applied to the transparent substrate, dried, and processed to desired pattern by photolithography. The coating method includes spin coating, flow coating, roll coating, etc. The exposure method includes projection exposure and proximity exposure.

The amorphous fine particles 13 in the light scattering layer can be, for example, produced by mixing two kinds of resins and causing phase separation. Specifically, at least two kinds of resins having different refractive index from each other, and a proper amount of additives are selected, and dissolved in solvent, and the resultant coating solution is applied to a substrate and dried to produce the amorphous fine particles 13.

Phase separation proceeds at a time when two resins are mixed, or while the solution is applied and the solvent vaporizes. When the coated film is dried, the amorphous fine particles 13 can be formed. Then, one kind of resin among phase-separated resins grows in spherical shape. As the solvent in the coated film on the substrate vaporizes, the volume of the film reduces and the volume of the spherical particles increases. However, the spherical particles are transformed to disk shape from spherical shape by stress from above during growth.

The condition in which one kind of resin grows as droplets to form amorphous fine particles 13 is as follows:

A denotes one kind of resin, and B denotes another kind of resin.

1) An amount of A is less than an amount of B.
2) Surface tension of A solution is larger than that of B solution.
3) Evaporation speed of A solution is higher than that of B solution.
4) Molecular weight of A is larger than that of B.

In this case, in particular, larger and smaller of amount is a restriction condition.

When the amorphous fine particles are formed by phase separation from resin solution containing two kinds of resins having different refractive index from each other, the amorphous fine particles remains in the film and does not expose at the surface of the film. Therefore, the light scattering layer has a smooth surface and the thickness of the color filter becomes uniform.

It is desirable that the transparent matrix resin 14 and amorphous fine particles 13 formed by phase separation have a high transmittance to visible light and high resistance to thermal treatment and chemical treatment in the producing process of the liquid crystal display device.

The matrix resin includes for example, resin having a high refractive index such as epoxy-modified acrylic resin, fluorene resin, polyimide resin; a resin having low refractive index such as fluorine-modified acrylic resin, silicone-modified acrylic resin. The other matrix resin includes acrylic resin, epoxy resin, urethane resin, silicone resin, etc.

Spherical particles are easily available as the fine particles. The refractive indexes of transparent silica and silicone resin are a range of 1.43 to 1.44. The refractive index of cross-linked acrylic resin is 1.49 which is applied as a high refractive index resin.

When the pattern of the light scattering layer is formed by means of photolithography, acrylic resin or epoxy resin having a photosensitivity and developing property can be utilized. Thermosetting resin or ultraviolet-setting resin can be also utilized.

The other additives can be added which includes a surfactant for improving coating properties, photopolymerization initiator for imparting photosensitivity, sensitizer, etc.

Regarding the amorphous fine particles 13 in the light scattering layer 12, the other shape and producing process can be exemplified. Namely, a transparent resin is applied to the substrate, dried, patterned by means of photolithography to form a number of fine reliefs each having a thickness of a few microms, a pattern size of a few microms to several tens microms. Thereafter, the reliefs are heated to soften and thermally cross-linked. A transparent resin having different refractive index is applied on the cross-linked reliefs to form the light scattering layer.

Where the amorphous fine particles are semispherical micro lenses formed by melting fine resin patterns, light scattering properties can be adjusted by changing pattern configuration (size, shape, density). Alternatively, the sectional shape of the micro lens can be made asymmetrical or parabolic to form the light scattering layer having directivity.

It is desirable that the size of patterns of the light scattering layer, which is a cell gap adjusting layer, is the same as that of a retardation layer or larger than that of a retardation layer.

(Overlapping shape of color pixel)

TFT exposure apparatus is available which has a high alignment precision with 3$\sigma$ of 1.5 $\mu$m. In the case of exposure relating to forming of TFT, a metal wiring is marked with alignment mark, and in the case of exposure relating to forming of a color filter, an organic film (for example, photosensitive coloring composition film) is marked with alignment

mark. Similarly, in the case of exposure to laminated color layers, an organic film is marked with alignment mark. Since the organic film has a thickness of a range of 1 to 4 μm which is larger than that of a wiring of TFT and a pattern edge is sloped, it is necessary that alignment precision is 3σ of at least 4.5 μm.

As described above, the thickness of the liquid crystal layer is a range of about 2 to 4 μm in the liquid crystal display device of IPS system or FFS system. The thickness of the coloring layer in the color filter of the invention is 0.6 to 1 time of that of the liquid crystal layer. Therefore, specific thickness of the coloring layer is a range of about 1.2 to 4 μm.

Incidentally, line width of the black matrix is different from either for mobile liquid crystal display device or for large scaled liquid crystal display device, and is about 5 to 30 μm. Where aperture ratio of the pixel precedes the other property, the black matrix may be omitted as described above.

FIG. 9 shows the pattern edge shape of thick color pixel 22, and FIG. 10 shows the pattern edge shape of thin color pixel 23. When length m, n of the pattern edge relating to alignment is set to 4.5 μm, and a range of 1.2 to 4.0 μm of thickness of the coloring layer is applied to the thickness s of color pixel 22 and the thickness t of color pixel 23, a slope angles θ1, θ2 of the pattern edge are calculated. As a result, the slope range of 15° to 40° is determined. Therefore, though the slope angle depends on the thickness of the coloring layers 22, 23, it is desirable to form the edge shape of the color pixel at the slope angle of 15° to 40° in order to good flatness.

The edge shape of the color pixel can be controlled by various methods such as altering amount of polymerization initiator, developing method, exposure dose, etc. It is desirable that the shape of the color pixel viewed from above is continuous stripe.

A protective layer and insulating layer which are made of transparent resin, may be laminated on the color filter substrate of the present invention in order to flatten the uneven surface with unevenness of 0.1 μm or less, such as fine texture surface of the color filter, surface of the cell gap adjusting layer described above, treated surface (alignment treatment) before forming the cell gap adjusting layer, and in order to improve electric insulating properties. The protective layer may be formed of a transparent resin having high molecular weight and easily exerting follow-up action (contrary to flatness) in order to secure a height of the spacer to a certain extent. When the protective layer having a small thickness of a range of 0.05 to 0.3 μm is formed, it is possible to secure a height of the spacer. Further, a high spacer is formed in advance, whereby the protective layer having a thickness of at least 1 μm may be formed.

The protective layer may serve also as an alignment film, or may be formed before pretreatment of a retardation layer described later. Alternatively, the protective layer may contain an additive (for example, ultraviolet absorbing agent) having a function of assisting light alignment of retardation layer and alignment film of liquid crystal. Protrusions made of the same material as that of the light shielding layer may be formed in the pixel in advance, and further, the coloring layer may be laminated to form an alignment controlling structure. The spacer may serve as also an alignment controlling structure. For example, when both the TFT elements driving liquid crystal on the TFT substrate and the pedestal on the color filter side are formed in the center of the pixel so as to oppose to each other, the spacer can serve as also an alignment controlling structure in the vertical alignment liquid crystal display.

(Retardation layer)

The reflective section of the transflective liquid crystal display device has a retardation different from that of the transmitting section due to the presence of liquid crystal in addition to retardation due to difference in light path. Difference in retardations of the reflective section and transmitting section brings about coloring of reflective light and black display, or conversion of normally-black display to normally-white display. Thus, retardation is an important problem.

This problem can be solved by shifting retardation of incidental light by 1/4 wavelength and adding retardation of 1/4 wavelength due to reflection on the reflective electrode (90 degree polarization rotation of incident light, which has been converted to linearly polarized light, in one passage of the incident light back and forth in a thickness direction of the retardation layer).

In the transflective liquid crystal display device of the present invention, specific technique for imparting function of altering retardation by 1/4 wavelength or 1/2 wavelength to the retardation layer includes a coating method using high polymer liquid crystal or cross-linkable high polymer liquid crystal solution, a method of adding birefringence adjusting agent to alkali-soluble transparent resin, a method of using polymerizable liquid crystal compound and the like. In the case of using polymerizable liquid crystal compound, there is employed a discotheque polymerizable liquid crystal compound having a disk-like molecule structure and a bar-like polymerizable liquid crystal compound. The retardation layer may be formed in combination of the method described above and the material.

In order to improve reproducibility of imparting function of shifting a phase of polarized light by 1/4 wavelength or 1/2 wavelength, an alignment film may be formed or alignment treatment may be performed before forming the retardation layer. Where alignment can be adjusted by altering exposure dose or exposure wavelength like the case using a polymerizable liquid crystal compound, it is possible to adjust alignment density and alignment direction according to color of the color pixel. Alignment treatment of the alignment film may be performed by light alignment treatment in the same manner as the case using a polymerizable liquid crystal compound.

The exposure apparatus can be selected from the group consisting of ultra-high pressure mercury lamp, YAG laser, solid laser, and semiconductor laser, together with wavelength of light to be used. In the case of laser exposure, alignment density and alignment direction can be adjusted by selection of exposure wavelength, adjustment of exposure dose by changing number of laser shot, adjustment of incidental angle, etc. Selective exposure may be performed every color pixel using a plurality of photomasks corresponding to the color pixel. Exposure may be performed from a plurality of directions at once. Exposure may be either polarized exposure or non-polarized exposure. After polarized exposure is performed, fixing may be performed during heating by non-polarized exposure. Where there is oxygen inhibition, it is desirable to perform exposure under an atmosphere of inert gas.

The thickness of the retardation layer may be a range of 0.5 to 5 $\mu$m, and may be adjusted according to only a kind of structural material of the color filter, or birefringence of liquid crystal. Retardation of the retardation layer may be adjusted by exposure dose, addition amount, kind, and blend of polymerization initiator added to polymerizable liquid crystal compound. Where polymerizable liquid crystal compound is monomer, cross-linking density may be increased using monomer having a plurality of reaction group, thereby to obtain the retardation layer having a high reliability.

The retardation layer can be formed according to main wavelength of a transmitting light through the color pixel. In the case of normally-black display, a function of shifting retardation by 1/4 wavelength or 1/2 wavelength may be imparted to not only the retardation layer on the color pixel, but also the retardation layer on the light shielding layer (picture frame portion), thereby to cancel light leakage. In the liquid crystal display device of normally-black display, when the retardation layer 11' is formed on the light shielding layer 2 of picture frame such that the sum of the thickness of the retardation layer 11' and the thickness of the light shielding layer 11 is identical with that of the green pixel, light leakage can be canceled and image quality can be improved.

Where polymerizable liquid crystal compound is used as the retardation layer, alignment film may be formed before forming the retardation layer, and may be alignment-treated. After the retardation layer is formed to obtain the color filter, it is desirable to form an alignment film for alignment of liquid crystal. Where alignment amount of the alignment film can be adjusted by means of irradiation of energy rays such as ultraviolet rays, it is possible to distinguish alignment amount of transmitting section from that of reflective section, and to alter alignment every color pixel. Alternatively, the alignment film used for alignment treatment of the retardation layer can be used for alignment treatment of the transmitting section, and a film having alignment function different from that of the above alignment film can be formed on the retardation layer in the reflective section.

The organic compound which can be used in the alignment film under the retardation layer, includes polymer such as polymethacrylate, acrylic acid/methacrylic acid copolymer, stylene/maleic imide copolymer, polyvinyl alcohol, poly(N-methylolaclileamide), stylene/vinyltoluene copolymer, chlorosulfonated polyethylene, nitrocellulose, polyvinyl chloride, chlorinated polyolefin, polyester, polyimide, polyamide, vinyl acetate/vinyl chloride copolymer, ethylene/vinyl acetate copolymer, carboxymethyl cellulose, polyethylene, polypropylene, polycarbonate, etc.; and a compound such as silane coupling agent. Preferred polymer includes polyimide, polystylene, polymer of stylene derivative, gelatin, polyvinyl alcohol, and alkyl-modified polyvinyl alcohol having alkyl group (number of carbon atoms is preferably at least 6).

It is possible to obtain alignment effect also by rubbing the surface of the color pixel of the color filter. Further, available alignment film material can be used which includes for example, alignment film material produced by Nissan Chemical Industries Ltd. (Sunever), alignment film material produced by HD Micro Systems Ltd. (QL, LX series), alignment film material produced by JSR Co. (AL series), alignment film material produced by CHISSO Co. (Ricson Aligner). It is possible to adjust viscosity of these alignment film material as an ink for inkjet printing by adding an organic solvent such as gamma butyrolactone, diethyleneglycol monoethylacetate, diethyleneglycol monobutylacetate, cyclohexanone, etc.

Alignment treatment of the alignment film under the retardation layer is performed by the same method as that employed in liquid crystal of the liquid crystal display device. The alignment treatment method includes for example, rubbing method for mechanically rubbing the surface of the alignment film, and light alignment method using ultraviolet rays. Light source of ultraviolet rays can be selected from the group of ultra-high pressure mercury lamp, low pressure mercury lamp, xenon lamp of short arc type, solid laser, YAG laser, semiconductor laser, etc. Wavelength, exposure angle, and exposure dose of ultraviolet rays used in exposure can be also properly selected. In the exposure to ultraviolet rays, a plurality of exposure directions such as two directions, four directions, etc., can be employed.

In Examples described later, the alignment film pattern is formed by ink-jet method that is most easy method. However, patterning may be performed by means of photolithography using photosensitive alignment film material that can be developed.

It is desirable to laminate the cell gap adjusting layer or retardation layer on the light shielding layer to reduce step of the light shielding portion. The reason is because, as described in FIG. 14, alignment irregularity of liquid crystal molecules resulting from step A caused in the color pixel 3 and light shielding layer 2 is resolved by improvement in flatness of the color filter.

Incidentally, area ratio of transmitting section to reflective section can be adjusted according to use object and condition of the liquid crystal display device.

Example

(Preparation of light shielding layer material/black composition)

(Pigment dispersion RD1)

20 parts of a mixture of C.I. Pigment Red 254/C.I. Pigment Red 177 (weight ratio: 80/20) as a coloring agent, 5 parts (calculated as a solid matter) of BYK-2001 as a dispersing agent, and 75 parts of propylene glycol monomethylether acetate as a solvent were treated in a beads mill to prepare a pigment dispersion (RD1).

(Pigment dispersion YD1)

20 parts of C.I. Pigment Yellow 150 as a coloring agent, 5 parts (calculated as a solid matter) of SOLSPERSE-24000 as a dispersing agent, and 75 parts of propylene glycol monomethylether acetate as a solvent were treated in a beads mill to prepare a pigment dispersion (YD1).

(Pigment dispersion BD1)

20 parts of a mixture of C.I. Pigment Blue 15:6 as a coloring agent, 5 parts (calculated as a solid matter) of Ajisper PB-821 as a dispersing agent, and 75 parts of propylene glycol monomethylether acetate as a solvent were treated in a beads mill to prepare a pigment dispersion (BD1).

(Pigment dispersion VD1)

20 parts of a mixture of C.I. Pigment Violet 23 as a coloring agent, 5 parts (calculated as a solid matter) of Ajisper PB-821 as a dispersing agent, and 75 parts of propylene glycol monomethylether acetate as a solvent were treated in a beads mill to prepare a pigment dispersion (VD1).

(Synthesis of resin solution (P1))

800 parts of cyclohexanone was introduced into a reaction vessel and heated under a nitrogen gas stream, followed by adding dropwise the following mixture of monomer and thermal polymerization initiator to conduct polymerization.

| | |
|---|---|
| Stylene | 60 parts |
| Methacylic acid | 60 parts |
| Methyl methacrylate | 65 parts |
| Butyl methacrylate | 65 parts |
| Thermal polymerization initiator | 10 parts |
| Chain transfer agent | 3 parts |

After adding dropwise and sufficiently heating, a solution obtained by dissolving 2.0 parts of thermal polymerization initiator in 50 parts of cyclohexanone was added to continue reaction, thus obtaining an acrylic resin solution. Cyclohexanone was added to the acrylic resin solution such that the non-volatile content in the solution is 20 weight % to prepare resin solution (P1). Weight average molecular weight of the acrylic resin was about 10,000.

(Black composition)

A mixture having the below composition was uniformly stirred and mixed together to obtain a mixture. Then, the mixture was subjected to filtering using a 5 μm filter to prepare a black composition. This black composition is used in forming a light shielding layer and pedestal in Examples described later.

| | |
|---|---|
| Pigment dispersion (RD1) | 21 parts |
| Pigment dispersion (BD1) | 17 parts |
| Pigment dispersion (YD1) | 4 parts |
| Resin solution (P-1) | 9 parts |

(continued)

| | |
|---|---|
| Trimethylolpropane triacrylate | 4.8 parts |
| Photopolymerization initiator (IRGACURE-369; produced by Ciba-Geigy Co., Ltd.) | 2.8 parts |
| Photo-sensitizer (EAB-F; produced by Hodogaya Kagaku Co., Ltd.) | 0.2 parts |
| Cyclohexanone | 36.2 parts |

The black composition prepared as described above shows optical density (OD value) of about 1.8 in terms of cured film having a thickness of 1 μm. It is possible to adjust film thickness according to coating condition. It is possible also to adjust optical density of the coated film by adjusting solid content of resin (resin solution). Green organic pigment was not added to the black composition since it has a low light shielding property.

(Measurement of optical density (OD))

Optical density (OD) is a value showing light absorbing degree of material, and as larger OD value, higher the density of material. Optical density (OD) in the present invention is represented by the following equation (1). Tristimulus value Y of black composition coated substrate in C light source was measured by spectroscope OSP-200 produced by Olympus Co., followed by calculating optical density (OD) using the following equation (1).

[Equation 1]

$$\text{Optical density (OD)} = -\log (Y/100) \qquad (1)$$

Wherein Y denotes tristimulus value in C light source.

Black composition Blk which is diluted with an organic solvent to adjust the concentration thereof, was applied to the surface of a glass substrate to a thickness of 1 μm, and air-dried. The substrate coated with black composition film was heated for 1 minute at 90°C on a hot plate to remove excessive solvent. Thereafter, the substrate was fired for 1 hour at a temperature of 230°C in an oven to prepare a sample for measurement of optical density of the light shielding layer. The optical density of the light shielding layer was about 1.8.

It is possible to adjust a film thickness according to coating condition. It is also possible to adjust optical density of the coated film by adjusting component ratio (solid content) of the resin solution. Where the black composition film has a large thickness of 4 to 5 μm, amounts of resin solution and solvent (cyclohexanone, etc.) may be increased to set a concentration of organic pigment to about 10% based on the black composition. Then, light shielding property is set to 3 to 4 in terms of optical density.

In Examples described later, black composition film having a thickness of 1.6 μm shows optical density of about 3 with the solid content and solvent amount of the black composition film being adjusted.

(Preparation of resin composition for light scattering layer)

Photosensitive resin composition for light scattering layer having the following composition was prepared.

| | |
|---|---|
| Alkali-soluble photosensitive transparent resin A2 : epoxy acrylate resin having fluorene skeleton | 4.5 parts |
| Transparent particles B3 (MX 180 produced by Soken Kagaku Co.) | 2 parts |
| Photopolymerization initiator C (IRGACURE 819; produced by Ciba Speciality Chemicals Co., Ltd.) | 0.45 parts |
| Solvent D: cyclohexanone | 21 parts |
| Photopolymerizable monomer (M400 produced by ToagoseiCo.Ltd.) | 2 parts |

After A2, C, and E were mixed, the mixture was applied to a substrate, the coated film was dried, exposed to light (200 $mJ/cm^2$), and developed. Resultant film was cured for 60 minutes at a temperature of 230°C to form a transparent film having refractive index of 1.58 (D line 589 nm).

A2, B3, C, D, and E of weight ratio of A2:B3:C:D:E = 4.5:2:0.45:21:2 were mixed in a medialess diffuser for 3 hours to form a resin composition for light scattering layer. Viscosity of the composition was 14 cp/25°C.

(Preparation of color pixel material/coloring composition)

[Preparation Example of Pigment R2]

100 parts of diketo-pyrrolo-pyrrole based red pigment PR 254 ("IRGAPHOR RED B-CF; R-1" produced by Ciba Speciality Chemicals Co., Ltd.), 18 parts of pigment derivative (D-1), 1000 parts of pulverized common salt, and 120 pats of diethylene glycol were put into a 1 gallon stainless steel kneader (Inoue Seisakusho Co., Ltd.) and kneaded for 10 hours at a temperature of 60°C.

Then, the resultant mixture was introduced into about 2000 parts of hot water and stirred for about one hour by means of a high-speed mixer while heating it at a temperature of about 80°C to obtain a slurry product. This slurry product was then subjected to filtration and water washing repeatedly to remove common salt and solvent and dried for 24 hours at a temperature of 80°C to obtain 115 parts of a salt milling-treated pigment (R2).

[Preparation Example of Pigment R3]

100 parts of anthoraquinone based red pigment PR 177 ("CROMOPHTAL RED A2B" produced by Ciba Speciality Chemicals Co., Ltd.), 8 parts of pigment derivative (D-2), 1000 parts of pulverized common salt, and 180 pats of diethylene glycol were put into a 1 gallon stainless steel kneader (Inoue Seisakusho Co., Ltd.) and kneaded for 4 hours at a temperature of 70°C.

Then, the resultant mixture was introduced into about 4000 parts of hot water and stirred for about one hour by means of a high-speed mixer while heating it at a temperature of about 80°C to obtain a slurry product. This slurry product was then subjected to filtration and water washing repeatedly to remove common salt and solvent and dried for 24 hours at a temperature of 80°C to obtain 102 parts of a salt milling-treated pigment (R3).

[Preparation Example of Pigment R4]

170 parts of tert-amyl alcohol was introduced into a sulfonation flask under a nitrogen gas atmosphere. To this amyl alcohol, 11.04 parts of sodium was added to obtain a mixture, which was then heated at a temperature of 92 to 102°C. The resultant mixture was kept all night at a temperature of 100 to 107°C while agitating vigorously the fused sodium.

44.2 parts of 4-chlorobenzonitrile and 37.2 parts of diisopropyl succinate were dissolved in 50 parts of tert-amyl alcohol at a temperature of 80°C to obtain a solution, which was then added, taking two hours, to the aforementioned mixture at a temperature of 80 to 98°C to obtain a reaction mixture. This reaction mixture was further agitated for 3 hours at a temperature of 80°C and, at the same time, 4.88 parts of diisopropyl succinate was added dropwise to this reaction mixture.

The resultant reaction mixture was cooled down to room temperature and then added to a mixture kept at a temperature of 20°C and consisting of 270 parts of methanol, 200 parts of water and 48.1 parts of concentrated sulfuric acid. The resultant mixture was stirred for 6 hours at a temperature of 20°C to obtain a red mixture. This red mixture was then subjected to filtration and the residual matter was washed with methanol and water. This residual matter was then dried at a temperature of 80°C to obtain 46.7 parts of a red pigment (R-4).

[Preparation Example of Pigment G2]

46 parts of zinc phthalocyanine was dissolved in a molten salt consisting of 356 parts of aluminum chloride and 6 parts of sodium chloride and heated to a temperature of 200°C. Then, the resultant solution was cooled down to a temperature of 130°C and stirred for one hour. Then, the resultant solution was heated to 80°C, bromine was added at a rate of 10 part per hour to this reaction mixture taking 10 hours. Thereafter, chlorine was added at a rate of 0.8 part per hour to this reaction mixture taking 5 hours.

The resultant reaction mixture was gradually poured into 3200 parts of water and then subjected to filtration and water washing to obtain 107.8 parts of crude zinc phthalocyanine halide green pigment. An average number of bromine atoms included in one molecule of this crude zinc phthalocyanine halide green pigment was 14.1 and an average number of chlorine atoms included in one molecule of this crude zinc phthalocyanine halide green pigment was 1.9. In the present Example, number of bromine atoms is not limitative.

Then, 120 parts of this crude zinc phthalocyanine halide green pigment, 1600 parts of pulverized common salt, and 270 parts of diethylene glycol were put into a 1 gallon stainless steel kneader (Inoue Seisakusho Co., Ltd.) and kneaded for 12 hours at a temperature of 70°C.

Then, the resultant mixture was poured into 5000 parts of hot water and stirred for about one hour by means of a high-speed mixer while heating it at a temperature of about 70°C to obtain a slurry product. This slurry product was

then subjected to repeated filtration and water washing to remove common salt and the solvent and dried for 24 hours at a temperature of 80°C to obtain 117 parts of a salt milling-treated pigment (G2).

[Preparation Example of Pigment Y2]

150 parts of water was put into a separable flask and then 63 parts of 35% hydrochloric acid was put into the separable flask with stirring to prepare a solution of hydrochloric acid. Then, while taking care of the generation of foaming, 38.7 parts of benzenesulfonyl hydrazide was poured into the solution and then ice was added to the resultant solution until the liquid temperature of the resultant solution was cooled to not higher than 0°C. After this cooling step, 19 parts of sodium nitrite was put into the resultant solution taking 30 minutes and stirred for 30 minutes at a temperature ranging from 0 to 15°C. Thereafter, sulfamic acid was added to the resultant solution until the coloring of a potassium iodide-starch paper was no longer admitted.

Then, after the addition of 25.6 parts of barbituric acid to the resultant solution, the temperature thereof was raised to 55°C and stirred at this temperature for two hours. Then, 25.6 parts of barbituric acid was further added to the resultant solution and heated to 80°C. Then, sodium hydroxide was added to the resultant solution until the pH thereof became 5. After being stirred for 3 hours at 80°C, the temperature of the solution was allowed to cool down to 70°C and then subjected to filtration and hot-water washing.

The press-cake thus obtained was poured into 1200 parts of hot water to form slurry, which was then stirred for two hours at a temperature of 80°C. Thereafter, while keeping the temperature, the slurry was subjected to filtration and to hot-water washing using 2000 parts of hot water of a temperature of 80°C, thereby confirming that benzenesulfone amide was moved to the filtrate thus obtained. The press-cake thus obtained was then dried at a temperature of 80°C, thus obtained 61.0 parts of disodium azobarbiturate.

Then, 200 parts of water was put into a separable flask and then 8.1 parts of disodium azobarbiturate powder thus obtained was put into the separable flask with stirring to disperse the powder. After being uniformly dispersed, the resultant solution was heated to a temperature of 95°C and mixed with 5.7 parts of melamine and 1.0 parts of diallylamino melamine to obtain a mixed solution. Further, 6.3 parts of cobalt(II) chloride hexahydrate was dissolved in 30 parts of water to obtain a green solution, which was then added drop-wise to the aforementioned mixed solution over 30 minutes. After finishing the addition of the green solution, the resultant solution was subjected to complexation for 1.5 hours at 90°C.

Subsequently, the pH of the resultant solution was adjusted to 5.5 and then 20.4 parts of an emulsion-like solution consisting of 4 parts of xylene, 0.4 parts of sodium oleate and 16 parts of water, which were agitated in advance, was added to the pH-adjusted solution and agitated under heating for 4 hours. After being cooled to a temperature of 70°C, the solution was immediately subjected to filtration and to water washing using water of a temperature of 70°C until the inorganic salts was completely washed.

Thereafter, the product thus obtained was subjected to the steps of drying and grinding to obtain 14 parts of azo-based yellow pigment (Y2).

[Preparation Example of Pigment B2]

100 parts of a copper phthalocyanine-based blue pigment PB15:6 (Toyo Ink Manufacturing Co.; Lionol Blue ES), 800 parts of pulverized common salt and 100 parts of diethylene glycol were put into a one-gallon stainless steel kneader (Inoue Seisakusho Co., Ltd.) and kneaded for 12 hours at a temperature of 70°C.

The resultant mixture was then introduced into 3000 parts of hot water and stirred for about one hour by means of a high-speed mixer while heating it at a temperature of about 70°C to obtain a slurry product. This slurry product was then repeatedly subjected to filtration and water washing to remove the common salt and the solvent and dried for 24 hours at a temperature of 80°C to obtain 98 parts of a salt milling-treated pigment (B2).

[Preparation Example of Pigment V2]

300 parts of Lionogen Violet RL (Toyo Ink Manufacturing Co.) was mixed with 3000 parts of 96% sulfuric acid and agitated for one hour. Then, the resultant mixture was poured into water of 5°C. After being agitated for one hour, the mixture was subjected to filtration and hot-water washing until the washing liquid became neutral. Thereafter, the residue was dried at a temperature of 70°C.

120 parts of the acid pasting-treated pigment thus obtained, 1600 parts of sodium chloride and 100 parts of diethylene glycol (Tokyo Kasei Co., Ltd.) were put into a one-gallon stainless steel kneader (Inoue Seisakusho Co., Ltd.) and kneaded for 18 hours at a temperature of 90°C. The resultant mixture was then introduced into about 5 L of hot water and stirred for about one hour by means of a high-speed mixer while heating it at a temperature of about 70°C to obtain a slurry product. This slurry product was then subjected to filtration and water washing to remove the sodium chloride and the diethylene glycol and dried for 24 hours at a temperature of 80°C to obtain 118 parts of a salt milling-treated pigment (V2).

(Preparation of resin solution (P2))

800 g of cyclohexanone was poured into a reaction vessel and then heated to 100°C while continuing the blowing of nitrogen gas into the reaction vessel. Then, while keeping this temperature, a mixture of the monomers and a thermal polymerization initiator described below was added drop-wise to the cyclohexanone taking one hour, thereby allowing a polymerization reaction to take place.

| | |
|---|---|
| Styrene | 70.0 parts |
| Methacrylic acid | 10.0 parts |
| Methyl methacrylate | 65.0 parts |
| Butyl methacrylate | 65.0 parts |
| Azobis-isobutyronitrile | 10.0 parts |

After finishing the drop-wise addition, the reaction of the resultant mixture was allowed to take place for three hours at 100°C. Then, a solution obtained by dissolving 2.0 parts of azobis-isobutyronitrile in 50 parts of cyclohexanone was added to the mixture, thereby allowing the reaction to take place additionally for one hour at 100°C to synthesize a solution of resin.

After being cooled to room temperature, 2 g of the solution of resin was taken up as a sample and heated to dry for 20 minutes at 180°C. Then, nonvolatile matters was measured and, based on this measurement, cyclohexanone was added appropriately to the previously synthesized solution of resin so as to prepare a solution (P2) of acrylic resin containing 20% of nonvolatile matters.

(Preparation of pigment dispersion and coloring composition solution)

The mixtures having the compositions (weight part) shown in the following Table 4 were respectively uniformly agitated to form a mixture, which was then subjected to dispersion for 5 hours by means of a sand mill using zirconia beads each having a diameter of 1 mm. The resultant dispersion was then subjected to filtration using a 5-μm filter, thereby obtaining pigment dispersions of red, green, and blue.

Table 4

| Pigment dispersion | | RP-5 | GP-4 | BP-1 |
|---|---|---|---|---|
| Kind | First pigment | R2 | G2 | B1 |
| | Second pigment | R4 | Y2 | V1 |
| | Third pigment | R3 | - | - |
| | Fourth pigment | Y2 | | |
| | Pigment derivative 1 | D-1 | D-3 | D-4 |
| | Pigment derivative 2 | D-2 | | |
| | Pigment derivative 3 | D-3 | | |
| Composition (weight part) | First pigment | 0.5 | 8.3 | 9.4 |
| | Second pigment | 4.2 | 5.4 | 0.6 |
| | Third pigment | 3.9 | 0 | 0 |
| | Fourth pigment | 2.1 | | |
| | Total of pigment derivatives | 1.3 | 1.8 | 1.8 |
| | Acrylic resin solution | 40 | 36.5 | 40.2 |
| | Organic solvent | 48 | 48 | 48 |
| | Total | 100 | 100 | 100 |

Subsequently, as shown in the following Table 5, an acrylic resin solution (P2) containing pigment dispersion, a monomer, a photopolymerization initiator, a sensitizer, and an organic solvent were agitated and mixed to obtain a mixture. This mixture was then subjected to filtration using a 5-μm filter, thereby obtaining coloring compositions of red, green and blue. In Examples described below, a red pixel, green pixel and blue pixel were formed using the following

coloring compositions shown in Table 5.

Table 5

| Photosensitive color composition | RP-5 | GP-4 | BP-1 |
|---|---|---|---|
| Pigment dispersion (kind) | RP-5 | GP-4 | BP-1 |
| Pigment dispersion (amount) | 34 | 35 | 28 |
| Acrylic resin solution | 13.2 | 12.2 | 19.2 |
| Monomer | 4.0 | 4.08 | 5.6 |
| Photopolymerization initiator | 3.4 | 2.8 | 2.0 |
| Sensitizer | 0.4 | 0.2 | 0.2 |
| Organic solvent | 45.0 | 45.0 | 45.0 |
| Total | 100 | 100 | 100 |

There will be explained the present invention based on the following Examples.

[Example 1]

(Production of color filter substrate)

There will now be described production of a color filter substrate of Example 1 with reference to FIGS. 1, 3, and 5.

A light shielding layer 2 of picture frame shape and pedestal 4 shown in FIGS. 1, 3, and 5 were formed using the black composition described above on a transparent substrate made of glass. The thickness of the light shielding layer 2 was 1.6 μm, and the thickness of the pedestal 4 was 0.6 μm. The light shielding layer 2 and pedestal 4 were produced by making use of the method described below. The surface of a glass substrate was coated with a black composition described above and then dried. Then, the coated film was exposed to light through a gray tone photomask (photomask having a light shielding layer pattern and a pedestal pattern which are different from each other in transmittance). Thereafter, the resultant film was subjected to development and cured, thereby forming the light shielding layer 2 and pedestal 4.

Subsequently, a red pixel 3R, green pixel 3G, blue pixel 3B, and a spacer 5 consisting of a red laminate portion 5R, green laminate portion 5G, and blue laminate portion 5B were formed on the transparent substrate 1. Gray tone photomask was employed as an exposure photomask for forming pixels and spacer. As a result, a recess was formed in the reflective section of the color pixel.

The thickness of that portion of the coloring layer (red pixel 3R, green pixel 3G, blue pixel 3B) which was directly formed on the transparent substrate 1, was 3.2 μm ± 0.2 μm. The thickness of the coloring layer in the reflective section (recess) was 1.6 μm ± 0.2 μm. Since, in the present Example, a wall of the color pixel having a height of about 1.6 μm was formed so as to surround the recess that was a reflective section of the color pixel, an alignment film could be formed by ink-jet process without flowing-out of ink droplets outside the recess on landing of ink droplets.

Next, alignment treatment was performed in the following manner as a pretreatment before a retardation layer was formed. Namely, alignment film material "Sunever" produced by Nissan Chemical Industries Ltd. having adjusted viscosity was selectively jetted on the color pixel in a reflective section by means of ink-jet coating apparatus such that thickness of dried film becomes 0.1 μm.

In order to properly jet ink without non-jet, misdirection, and generation of mist, it is necessary to control rheological properties of ink in the case of non-jet. Rheological properties showing excellent jet properties of ink filled in ink-jet apparatus are as follows:

When frequency is changed 100 Hz to 0.1 Hz, initial value of complex viscosity of ink at a temperature of 23 to 25°C is 20 mPa●s or less, and maximum value of that is 1000 mPa●s or less. Tangent loss in frequency of 10 Hz to 50 Hz is 1 to 20. In this case, when amount of ink jetted through ink-jet nozzle was 2 to 10 pl (pico liter), ink jets one time for one pixel.

After the film was heated and dried on a hot plate for 1 minute at a temperature of 90°C, it was fired in a clean oven for 40 minutes at a temperature of 260°C. Thereafter, the film was subjected to rubbing treatment in one direction as a pretreatment.

A retardation layer 11 having a retardation function of changing a phase by 1/4 wavelength was formed on the color pixel in the reflective section in a film thickness of 1.6 μm ± 0.1 μm.

A mixture of the following composition for a retardation layer was uniformly mixed and agitated. The resultant solution was then subjected to filtration using a 0.6 μm filter, thereby obtaining polymerizable liquid crystal compound.

This polymerizable liquid crystal compound was applied to the pretreated color pixel such that a thickness of a dried film becomes 1.6 μm, and the resultant film was heated on a hot plate for 2 minutes at a temperature of 90°C, thus obtaining a liquid crystal alignment substrate.

| | |
|---|---|
| Parallel alignment polymerizable liquid crystal (Palicolor LC 242; produced by BASK Japan Co.) | 39.7 parts |
| photopolymerizable initiator (IRGACURE-907; produced by Ciba-Geigy Co., Ltd.) | 0.3 parts |
| Surfactant (BYK-111; 2% cyclohexanone splution; produced by Bick Chemee Co., Ltd.) | 6.0 parts |
| Cyclohexanone | 154.0 parts |

Subsequently, polymerizable liquid crystal compound was applied to the substrate, and the coated film was exposed to ultraviolet rays through a photomask using an exposure apparatus provided with semiconductor laser as a light source, for every color pixel in the reflective section. Exposure dose of ultraviolet rays was 500 mJ/cm$^2$ to the red pixel region, 200 mJ/cm$^2$ to the green pixel region, 5 mJ/cm$^2$ to the blue pixel region, by changing number of shot of laser. Thereafter, the exposed film on the substrate was subjected to development to form a pattern of a retardation layer.

Next, the substrate was introduced into a clean oven and fired for 40 minutes at a temperature of 230°C, thereby obtaining a color filter substrate having the retardation layer that is 1/4 wavelength layer formed thereon.

The sum of retardations of the color pixel and retardation layer in the obtained color filter substrate were determined as follows: That is, the sum of retardations in the red pixel portion was 166 nm in light of wavelength 630 nm, the sum of retardations in the green pixel portion was 136 nm in light of wavelength 550 nm, and the sum of retardations in the blue pixel portion was 112 nm in light of wavelength 450 nm. These results are shown in the following Table 6.

Table 6

| Region | | Red pixel | Green pixel | Blue pixel |
|---|---|---|---|---|
| Exposure dose to retardation layer | | 500 mJ | 200 mJ | 5 mJ |
| Measurement wavelength of retardation | | 630 nm | 550 nm | 450 nm |
| Retardation | Color filter (CF) layer | 5 nm | 0 nm | 0 nm |
| | CF layer + retardation layer | 166 nm | 136 nm | 112 nm |
| | Retardation layer | 161 nm | 136 nm | 112 nm |
| Thickness of retardation layer | | 1.6 μm | 1.6 μm | 1.5 μm |
| Birefringence of retardation layer | | 0.100 | 0.085 | 0.072 |

A retardation layer 11' was formed also on the light shielding layer 2 of picture frame shape, with the retardation layer 11' having the same picture frame shape pattern as that of the light shielding layer 2. The sum of the thickness of the light shielding layer 2 and the thickness of the retardation layer 11' formed on the light shielding layer 2 is about 3.2 nm and the same as the thickness of the green pixel 3G.

Subsequently, a light scattering layer (cell gap adjusting layer) 12 having a thickness of 1.9 μm was formed using the light-scattering composition described above. The forming method is as follows: The film of the light-scattering composition was exposed to ultraviolet rays in a dose of 200 mJ/cm$^2$ through a photomask having a pattern of the light scattering layer 12, and was subjected to development using an alkali developing solution, followed by firing 40 minutes at a temperature of 230°C to cure it. The exposure and development lead to stabilization in the additional curing of the retardation layer arranged under the light scattering layer 12. Due to lamination of the light scattering layer 12, oxygen inhibition of the retardation layer was cancelled, and the light scattering layer 12 can be stabilized by exposure to ultraviolet rays and curing. In the present Example, since the retardation layer was heated to cure after recess was formed in the color pixel, the retardation layer can be advantageously formed without deformation regardless difference in exposure dose.

Height d of the protrusion on the pedestal 4 shown in FIG. 4 was small, namely 0.1 μm in the blue pixel side, and 0.14 μm in the green pixel side, and flatness was excellent.

The size of the bottom surface of the spacer 5 shown in FIG. 3 was 25 μm, and the height of the entire laminate of coloring layers constituting the spacer 5 was about 3.9 μm. The thickness of the liquid crystal layer in the liquid crystal display device was 3.8 μm. The thickness of liquid crystal layer on the reflective section shown in FIG. 12 described later was 1.8 μm.

[Example 2]

(Production of color filter substrate)

There will be described Example 2 with reference to FIG. 7 which is a model plan view of a color filter substrate, and FIGS. 2 and 3 which are partial sectional views of FIG. 7. Example 2 is different from Example 1 in that black matrix is formed and cell gap adjusting layer is made of transparent resin.
A light shielding layer 2 and pedestal 4 shown in FIGS. 2, and 7 were formed using the black composition described above on a transparent substrate made of glass. The thickness of the light shielding layer 2 was 1.6 μm, and the thicknesses of the black matrix 8 and pedestal 4 were 0.6 μm. The light shielding layer 2, black matrix 8 and pedestal 4 were produced by making use of the method described below. The surface of a glass substrate was coated with black composition described above and then dried. Then, the coated film was exposed to light through a gray tone photomask (photomask having light shielding layer pattern and pedestal pattern which are different from each other in transmittance). Thereafter, the resultant film was subjected to development and heat treatment once, thereby forming the light shielding layer 2, black matrix 8 and pedestal 4.
Subsequently, a light shielding layer 11, red pixel 3R, green pixel 3G, blue pixel 3B, spacer 5 consisting of laminate of coloring layers, and sub spacer 6 were formed on the transparent substrate 1. Gray tone photomask having a pattern portion of low transmittance was employed as an exposure photomask for forming spacer 5 and sub spacer 6.
The thickness of that portion of the coloring layer (red pixel 3R, green pixel 3G, blue pixel 3B) which was directly formed on the transparent substrate 1, was 3.2 μm ± 0.2 μm.
A retardation layer 11 having a function of changing phase by 1/4 wavelength was formed on the color pixel 3G in the reflective section (recess) shown in FIG. 2 in a film thickness of 1.6 μm ± 0.1 μm. Pretreatment of the surface of the color pixel for imparting a retardation function through alignment treatment, forming of the retardation layer and materials used in these process were the same as those of Example 1.
Subsequently, a cell gap adjusting layer 15 having a thickness of 1.9 μm was formed using acryl based photosensitive resin that can be developed by alkali. A cell gap adjusting layer 15' was formed also on the light shielding layer 2 of picture frame shape with the same picture frame shape pattern. The sum of the thickness of the light shielding layer 2 and the thickness of the cell gap adjusting layer 15' formed on the light shielding layer 2 was about 3.2 nm and was the same as the thickness of the green pixel 3G.
The size of the bottom surface of the spacer 5 shown in FIG. 3 was 25 μm, and the height of the laminate of coloring layers constituting the spacer 5 was about 3.9 μm. The thickness of the liquid crystal layer in the liquid crystal display device was 3.8 μm.

[Example 3]

(Production of color filter substrate)

There will be described Example 3 with reference to FIG. 7 which is a model plan view of a color filter substrate, and FIGS. 2 and 3 which are partial sectional views of FIG. 7.
A light shielding layer 2 and pedestal 4 shown in FIGS. 2, and 7 were formed using the black composition described above on a transparent substrate made of glass. The thickness of the light shielding layer 2 was 1.6 μm, and the thicknesses of the black matrix 8 and pedestal 4 were 0.6μm. The light shielding layer 2, black matrix 8 and pedestal 4 were produced by making use of the method described below. The surface of a glass substrate was coated with a black composition described above and then dried. Then, the coated film was exposed to light through a gray tone photomask (photomask having light shielding layer pattern and pedestal pattern which are different from each other in transmittance). Thereafter, the resultant film was subjected to development and curing by heat treatment once, thereby forming the light shielding layer 2, black matrix 8 and pedestal 4.
Subsequently, a red pixel 3R, green pixel 3G, blue pixel 3B, spacer 5 consisting of laminate of coloring layers, and sub spacer 6 were formed on the transparent substrate 1. Gray tone photomask having a pattern portion of low transmittance was employed as an exposure photomask for forming spacer 5 and sub spacer 6.
The thickness of that portion of the coloring layer (red pixel 3R, green pixel 3G, blue pixel 3B) which was directly formed on the transparent substrate 1, was 3.2 μm ± 0.2 μm.
A retardation layer 11 having a function of changing phase by 1/2 wavelength was formed on the color pixel 3G in the reflective section (recess) shown in FIG. 2 in a film thickness of 2.6 μm ± 0.15 μm, as shown in Table 7 described below. Pretreatment of the surface of the color pixel for imparting a retardation function through alignment treatment was the same as those of Example 1. Retardations corresponding to the color pixels was adjusted by exposure dose. Polymerizable liquid crystal compound to be a retardation layer 11 has the following composition.
Parallel alignment polymerizable liquid crystal

| | |
|---|---|
| (UCL-017; produced by DIC Co.) | 49.5 parts |
| Photopolymerizable initiator (IRGACURE-OXE01; produced by Ciba Speciality Chemicals Co., Ltd.) | 0.5 parts |
| Surfactant (BYK-330; 2% cyclohexanone splution; produced by Bick Chemee Co., Ltd.) | 2.0 parts |
| Cyclohexanone | 148.0 parts |

Table 7

| Region | | Red pixel | Green pixel | Blue pixel |
|---|---|---|---|---|
| Retardation | Color filter (CF) layer | 5 nm | 0 nm | 0 nm |
| | CF layer + retardation layer | 305 nm | 275 nm | 238 nm |
| | Retardation layer | 300 nm | 275 nm | 238 nm |
| Thickness of retardation layer | | 2.7 μm | 2.6 μm | 2.5 μm |

Subsequently, a cell gap adjusting layer 15 having a thickness of 0.9 μm was formed using acryl based photosensitive resin that can be developed by alkali. A cell gap adjusting layer 15' was formed also on the light shielding layer 2 of picture frame shape with the same picture frame shape pattern. The height and shape were the same as those of Example 1.

Incidentally, in the liquid crystal display device obtained in Example 3 described above, the thickness of the retardation layer 11 is 2.6 μm. When the retardation layer 11 is formed in the recess of the color pixel (for example, green pixel 3G) having a thickness of 3.2 μm, it protrudes from the surface of the color pixel. Practically, the structure shown in FIG. 11 can be obtained.

[Example 4]

The liquid crystal display device shown in FIG. 12 was manufactured.

The color filter substrate 31 manufactured in Example 3 and TFT substrate 32 were arranged so as to oppose to one another and bonded with liquid crystal of parallel alignment system (IPS system), in which liquid crystal molecules were aligned in parallel to the surface of the substrate, interposed therebetween to provide a liquid crystal display device. Incidentally, a polarizing film, a retardation layer, and an alignment film were omitted in the figures.

A pixel electrode 35 electrically connected with TFT elements was a comb teeth pattern made of transparent conductive film. A common electrode (not shown) was arranged under the pixel electrode through an insulating layer.

The thickness of the liquid crystal layer was set to 3.8 μm.

[Example 5]

(Manufacture of liquid crystal display device)

The color filter substrate 31 manufactured in Example 1 and TFT substrate 32 were arranged so as to oppose to one another and bonded with liquid crystal of vertical alignment system (VA system), in which liquid crystal molecules were aligned in vertical with the surface of the substrate, interposed therebetween to provide a liquid crystal display device. Incidentally, a polarizing film, a retardation layer, and an alignment film were omitted in the figures.

In the present Example, the sum of the thickness of the light shielding layer and the thickness of the cell gap restricting layer is the same as that of the coloring layer which is a green pixel 3G, and there is not redundant protrusion. For that reason, liquid crystal could be filled smoothly and uniformly, thereby to display uniform image. There was no turbulence of liquid crystal alignment near the color pixels and at the boundary between the light shielding layer and display region to provide a liquid crystal display device without light leakage and of high quality.

Incidentally, FIG. 13 shows the enlarged part of a liquid crystal display device shown in FIG. 12 which positions near TFT elements 34. Where the thickness of the insulating layer 41 is small, liquid crystal can be driven more effectively by means of arched line of electric force generated between the pixel electrode 42 and the common electrode 43 through the insulating layer 41. In the present Example, there was not difference in display quality between the reflective section and the transmitting section to provide a liquid crystal display device having high transmittance.

## Claims

1. A color filter substrate for a transflective liquid crystal display device, in which a light shielding layer is arranged at a periphery of an effective display region on a transparent substrate, and color pixels of a plurality of colors including green pixels, a spacer, and a first retardation layer are formed in an effective display region,
**characterized in that** a recess is formed in each of the color pixels, the first retardation layer is formed in the recess, and the first retardation layer has a function for 90 degree polarization rotation of incident light, which has been converted to linearly polarized light, in one passage of the incident light back and forth in a thickness direction of the first retardation layer.

2. The color filter substrate according to claim 1, **characterized in that** a ratio of a thickness of the color pixel with the recess to a thickness of the color pixel without the recess is a range of 1/2 and 1/4.

3. The color filter substrate according to claim 1, **characterized in that** the green pixel contains zinc phthalocyanine halide as a main colorant.

4. The color filter substrate according to claim 1, **characterized in that** a first cell gap adjusting layer is formed on the first retardation layer.

5. The color filter substrate according to claim 4, **characterized in that** a level difference between a surface of the first cell gap adjusting layer and a surface of the color pixel without the recess is about 1/2 of a thickness of a liquid crystal layer of a liquid crystal display device.

6. The color filter substrate according to claim 4 or 5, **characterized in that** the first cell gap adjusting layer is a light scattering layer.

7. The color filter substrate according to claim 1, which further comprises a black matrix arranged in the effective display region so as to partition the color pixels and formed of the same material as that of the light shielding layer.

8. The color filter substrate according to claim 7, **characterized in that** a thickness of the black matrix is smaller than that of the light shielding layer.

9. The color filter substrate according to claim 1, **characterized in that** the light shielding layer contains a mixture of a plurality of organic pigments as a main colorant.

10. The color filter substrate according to claim 1, which further comprises a second retardation layer laminated on the light shielding layer, and a sum of the thickness of the light shielding layer and a thickness of the second retardation layer is about the same as a thickness of the green pixel.

11. The color filter substrate according to claim 1, which further comprises a second cell gap adjusting layer laminated on the light shielding layer, and a sum of the thickness of the light shielding layer and a thickness of the second cell gap adjusting layer is about the same as a thickness of the green pixel.

12. The color filter substrate according to claim 1, **characterized in that** the color pixels of the plurality of colors includes at least red pixels, green pixels, and blue pixels, and retardation values of the color pixels have a relation represented by the retardation value of the red pixel ≥ the retardation value of the green pixel ≥ the retardation value of the blue pixel.

13. The color filter substrate according to claim 1, **characterized in that** the color pixels of the plurality of colors includes at least red pixels, green pixels, and blue pixels, and total values of retardation value of each of the color pixels and the retardation value of the first retardation layer laminated on the color pixel have a relation represented by the total value regarding the red pixel ≥ the total value regarding the green pixel ≥ the total value regarding the blue pixel.

14. The color filter substrate according to claim 1, **characterized in that** the spacer is formed of a laminate of a plurality of coloring layers.

15. The color filter substrate according to claim 1, **characterized in that** the spacer exerts also a function of adjusting alignment of liquid crystal molecules, and arranged in a center of the color pixel in the longitudinal direction thereof.

16. A transflective liquid crystal display device **characterized by** comprising: a color filter substrate, an opposed substrate arranged so as to face the color filter substrate, and a liquid crystal layer disposed between the color filter substrate and the opposed substrate,
wherein a light shielding layer is arranged at a periphery of an effective display region on a transparent substrate, color pixels of a plurality of colors including green pixels, a spacer, and a first retardation layer are formed in the effective display region, a recess is formed in each of the color pixels, the first retardation layer is formed in the recess, and has a function for 90 degree polarization rotation of incident light, which has been converted to linearly polarized light, in one passage of the incident light back and forth in a thickness direction of the first retardation layer.

17. A method of producing a color filter substrate for a transflective liquid crystal display device, **characterized in that** a light shielding layer is arranged at a periphery of an effective display region on a transparent substrate, and color pixels of a plurality of colors including green pixels, a spacer, and a first retardation layer are formed in the effective display region, which comprises:

forming a recess in each of the color pixels, and
forming an alignment film for aligning the retardation layer in the recess by ink-jet process.

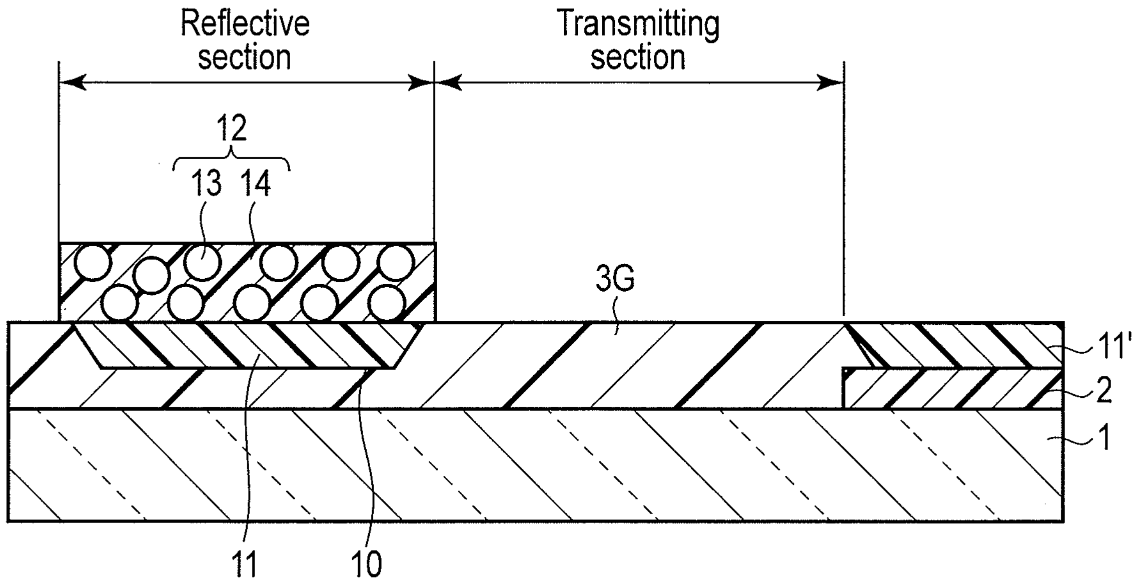
Reflective section
Transmitting section
12
13 14
3G
11'
2
1
11
10

FIG. 1

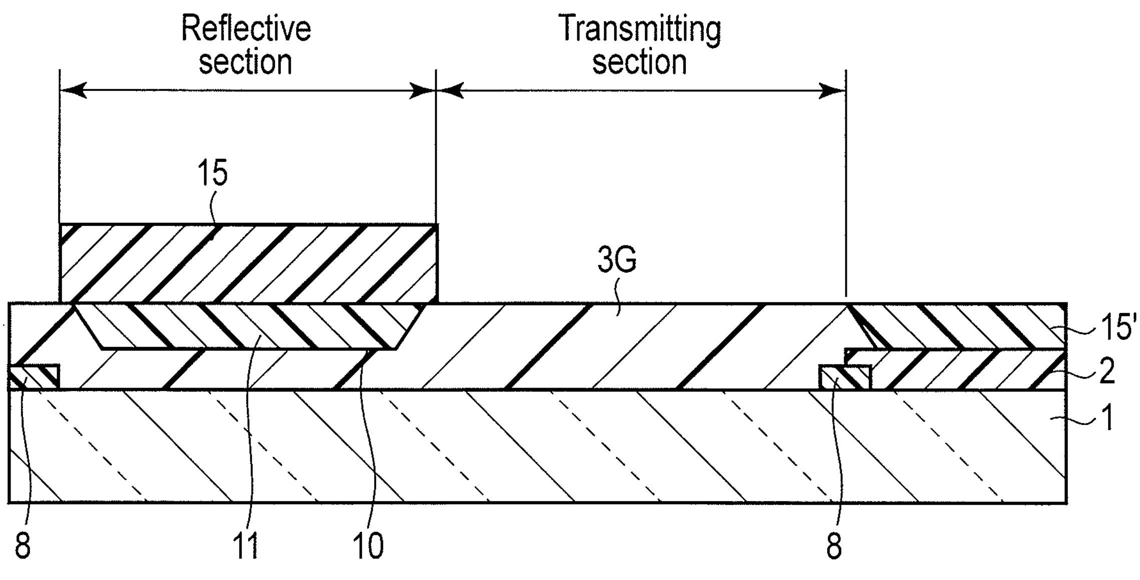
Reflective section
Transmitting section
15
3G
15'
2
1
8
11
10
8

FIG. 2

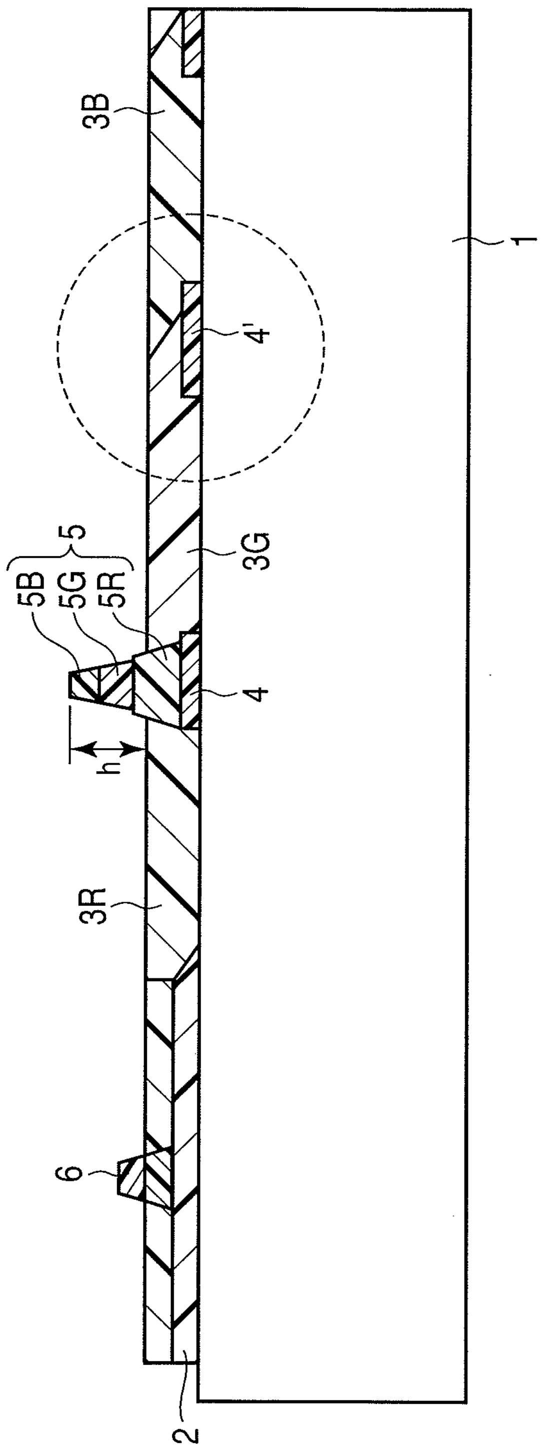


FIG. 3

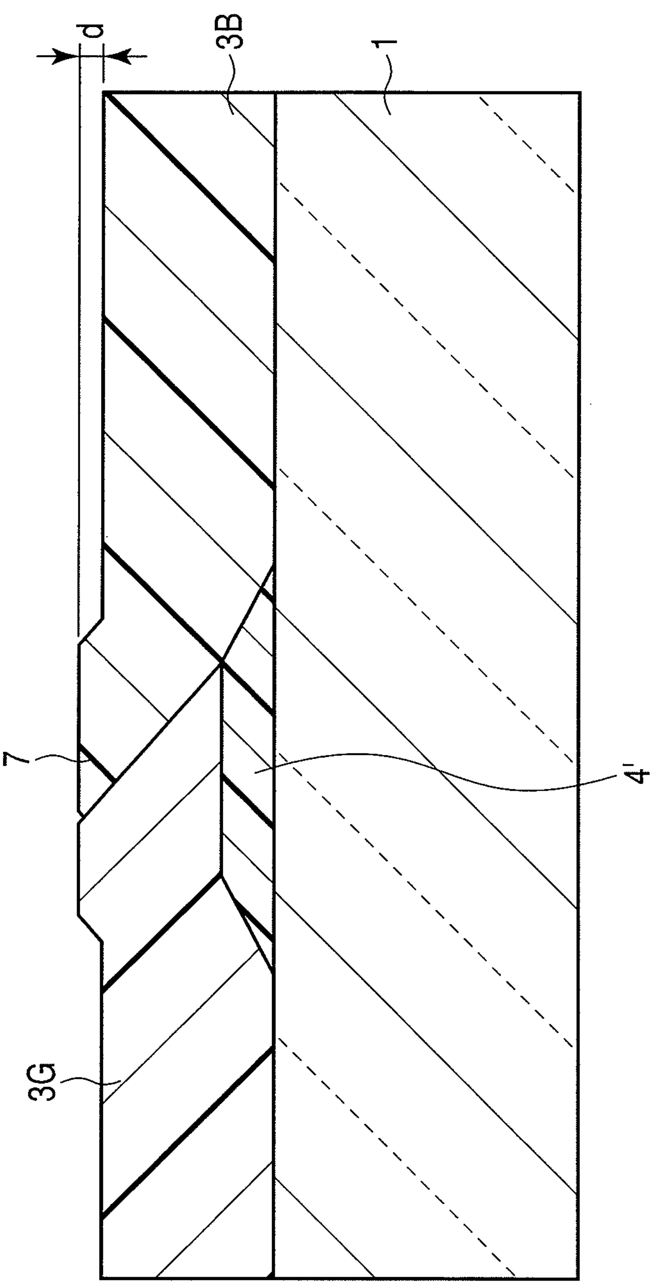


F I G. 4

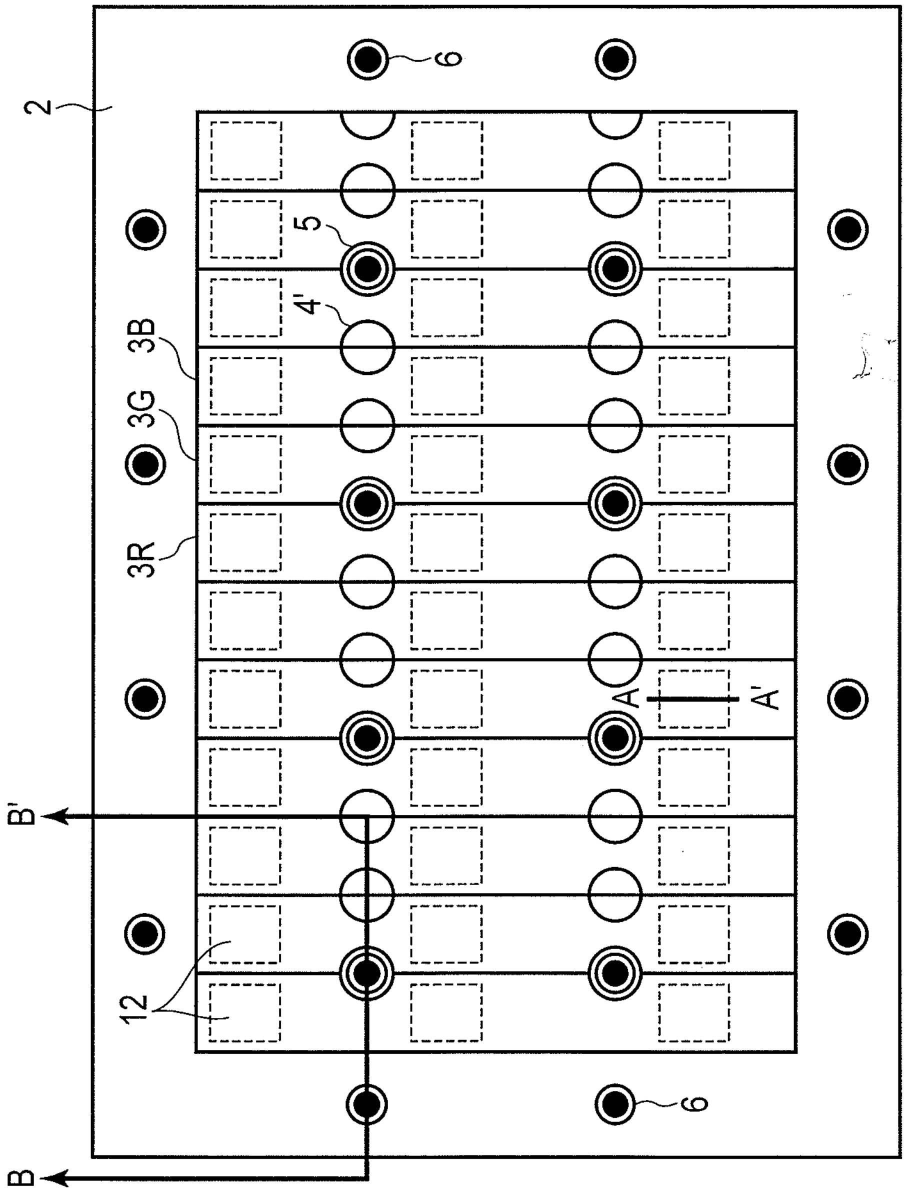


FIG. 5

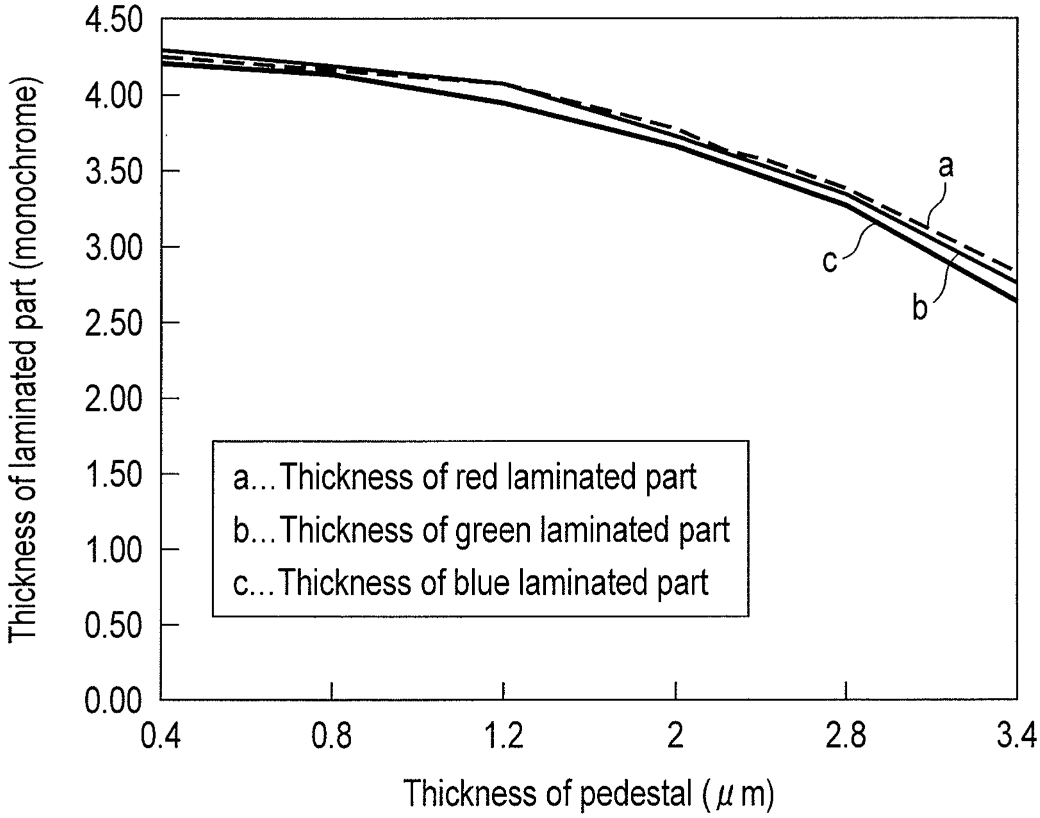
4.50
4.00
3.50
3.00
2.50
2.00
1.50
1.00
0.50
0.00
0.4
0.8
1.2
2
2.8
3.4
Thickness of laminated part (monochrome)
Thickness of pedestal (μm)
a
b
c
a...Thickness of red laminated part
b...Thickness of green laminated part
c...Thickness of blue laminated part

F I G. 6

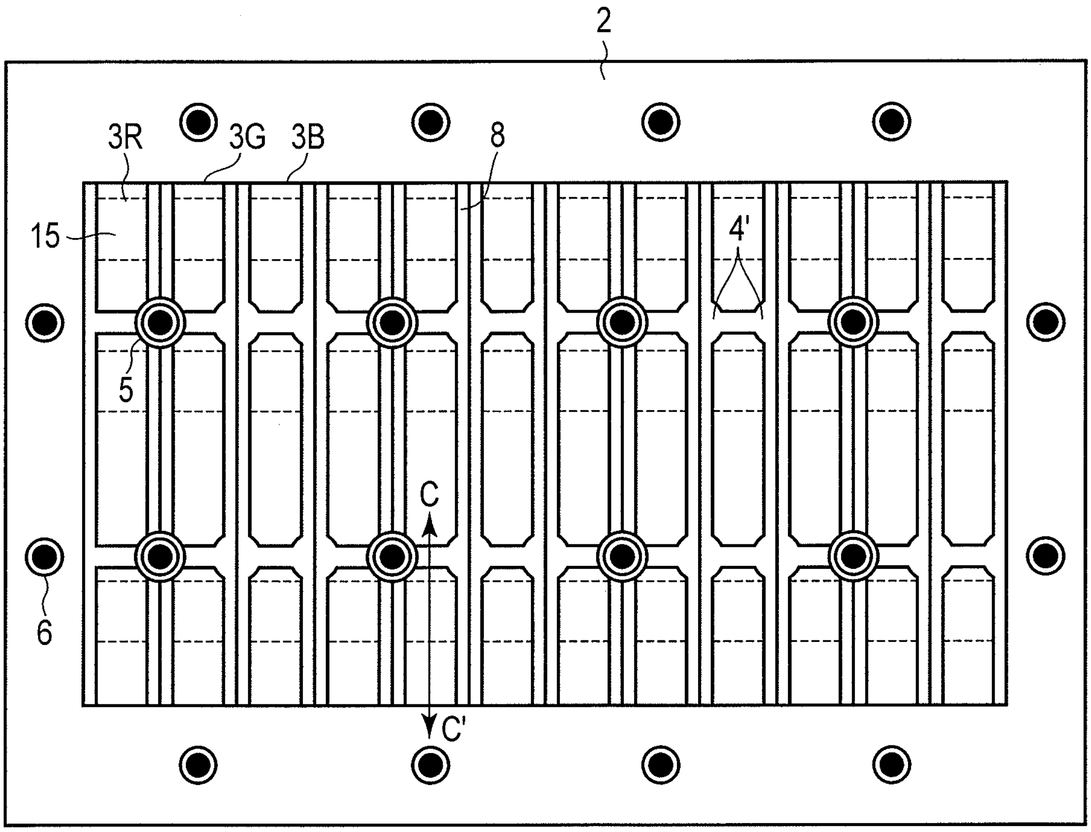
2
3R
3G
3B
8
15
4'
5
C
6
C'

F I G. 7

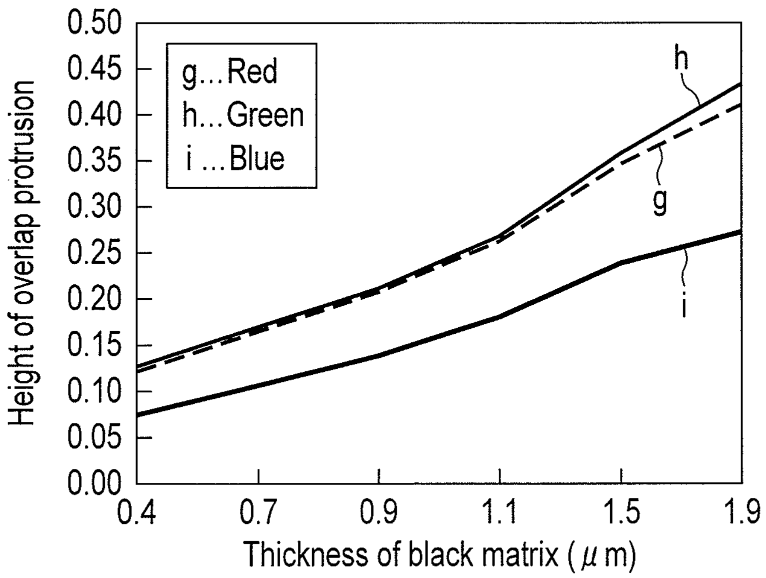
0.50
0.45
0.40
0.35
0.30
0.25
0.20
0.15
0.10
0.05
0.00
Height of overlap protrusion
g...Red
h...Green
i ...Blue
h
g
i
0.4
0.7
0.9
1.1
1.5
1.9
Thickness of black matrix (μ m)

F I G. 8

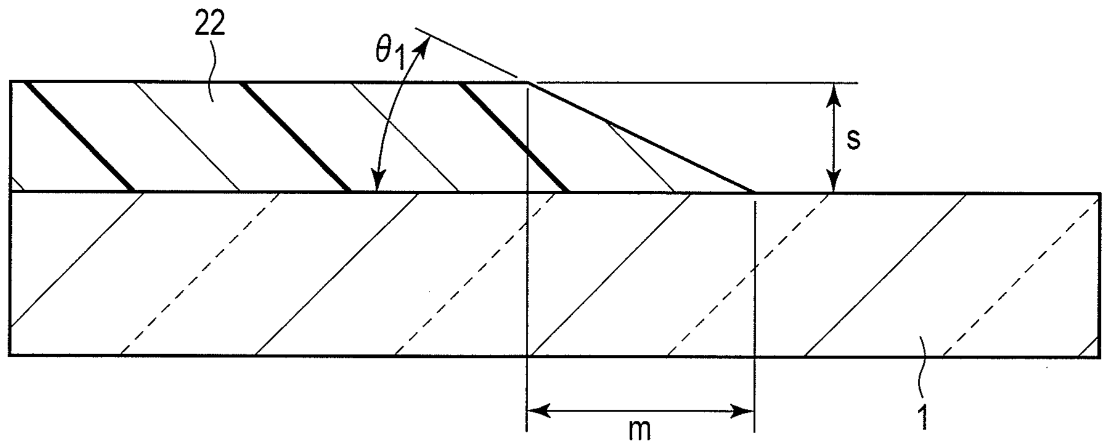


F I G. 9

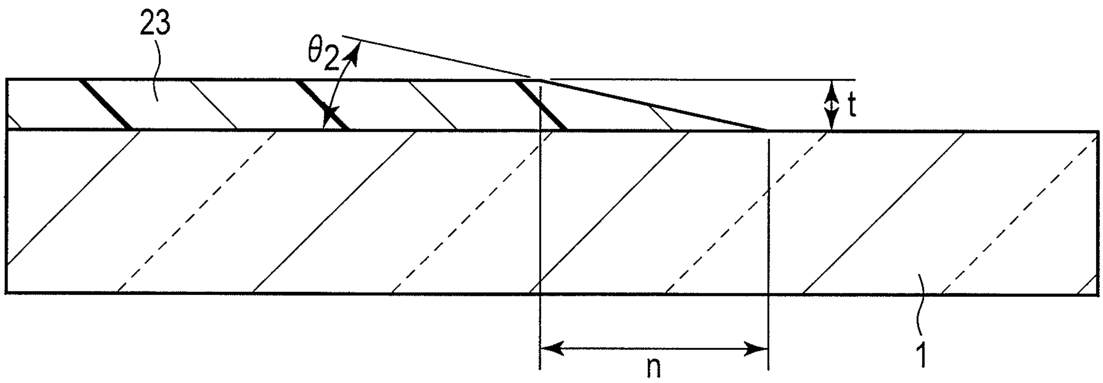


F I G. 10

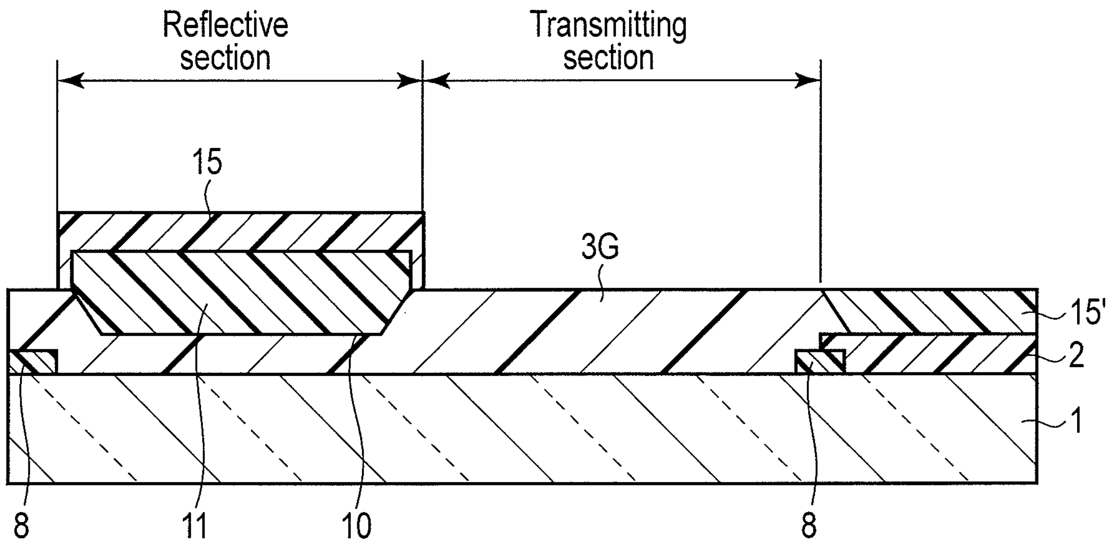
Reflective section
Transmitting section
15
3G
15'
2
1
8
11
10
8

F I G. 11

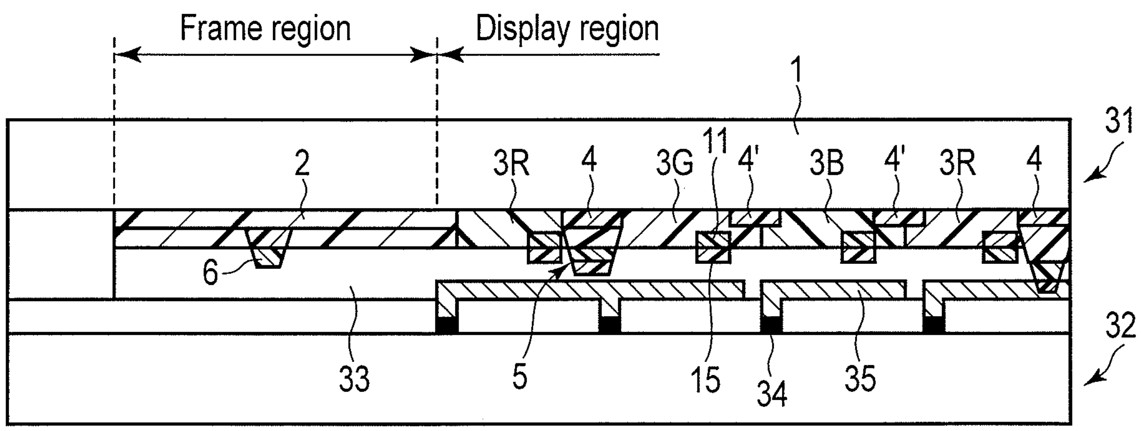
Frame region
Display region
1
31
2
3R
4
3G
11
4'
3B
4'
3R
4
6
33
5
15
34
35
32

F I G. 12

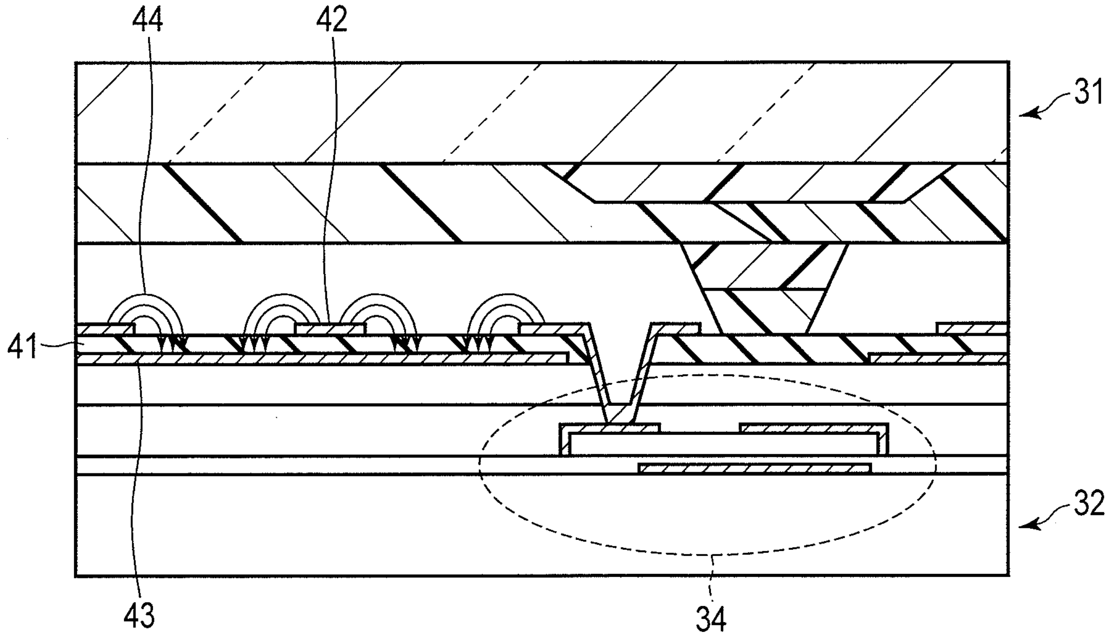


F I G. 13

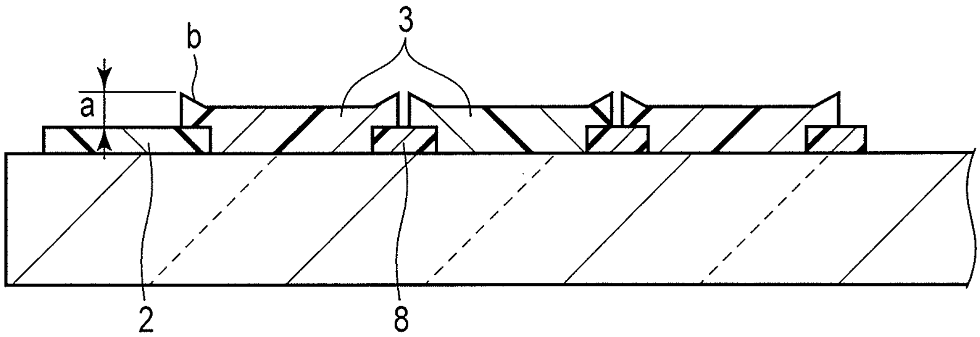


F I G. 14

**INTERNATIONAL SEARCH REPORT**

International application No.
PCT/JP2011/051493

A. CLASSIFICATION OF SUBJECT MATTER
*G02B5/20*(2006.01)i, *G02B5/22*(2006.01)i, *G02B5/30*(2006.01)i, *G02F1/1335*(2006.01)i, *G02F1/13363*(2006.01)i, *G02F1/1339*(2006.01)i

According to International Patent Classification (IPC) or to both national classification and IPC

B. FIELDS SEARCHED

Minimum documentation searched (classification system followed by classification symbols)
G02B5/20, G02B5/22, G02B5/30, G02F1/1335, G02F1/13363, G02F1/1339

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2008-268412 A (Seiko Epson Corp.), 06 November 2008 (06.11.2008), paragraphs [0006] to [0027]; fig. 1 (Family: none) | 1-17 |
| A | JP 2004-251993 A (Dainippon Printing Co., Ltd.), 09 September 2004 (09.09.2004), paragraphs [0032] to [0071]; fig. 1 (Family: none) | 1-17 |
| A | JP 2007-101645 A (Dainippon Printing Co., Ltd.), 19 April 2007 (19.04.2007), paragraphs [0014] to [0075]; fig. 1 & US 2007/0077502 A1 | 1-17 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
14 April, 2011 (14.04.11)

Date of mailing of the international search report
26 April, 2011 (26.04.11)

Name and mailing address of the ISA/
Japanese Patent Office

Facsimile No.

Authorized officer

Telephone No.

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9049914 A
- JP 3886740 B
- JP 2001272674 A
- JP 2004191832 A
- JP 2005024919 A
- JP 2008165250 A
- JP 3788421 B
- JP 2009128860 A
- JP 4306736 B